(19) **Europäisches Patentamt / European Patent Office / Office européen des brevets**

(11) **EP 4 391 641 A1**

(12) # EUROPEAN PATENT APPLICATION
published in accordance with Art. 153(4) EPC

(43) Date of publication:
**26.06.2024 Bulletin 2024/26**

(21) Application number: **22858185.6**

(22) Date of filing: **30.06.2022**

(51) International Patent Classification (IPC):
**H04W 28/04** (2009.01)  **H04W 16/32** (2009.01)
**H04W 72/04** (2023.01)

(52) Cooperative Patent Classification (CPC):
**H04W 16/32; H04W 28/04; H04W 72/04**

(86) International application number:
**PCT/JP2022/026376**

(87) International publication number:
**WO 2023/021862 (23.02.2023 Gazette 2023/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.08.2021 JP 2021133720**

(71) Applicant: **NTT DOCOMO, INC.**
**Tokyo 100-6150 (JP)**

(72) Inventors:
• **TAKAHASHI, Yuki**
**Tokyo 100-6150 (JP)**
• **NAGATA, Satoshi**
**Tokyo 100-6150 (JP)**
• **PI, Qiping**
**Beijing 100190 (CN)**
• **WANG, Jing**
**Beijing 100190 (CN)**
• **CHEN, Lan**
**Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, AND RADIO COMMUNICATION METHOD**

(57) Provided is to appropriately transmit a response signal for a received signal based on the dynamic scheduling. A terminal according to the present disclosure includes: a reception section that receives a control signal and a dynamically scheduled signal; a control section that determines a transmission cell for a response signal, based on whether the transmission cell for the response signal in the dynamically scheduled signal is indicated by the control signal; and a transmission section that transmits the response signal on the cell that is determined by the control section. The control section determines a target cell that is configured by default as the transmission cell for the response signal, in a case where the transmission cell for the response signal is not indicated by the control signal.

FIG. 16

EP 4 391 641 A1

# Description

Technical Field

The present disclosure relates to a terminal and a radio communication method.

Background Art

Long Term Evolution (LTE) has been specified for achieving a higher data rate, lower delay, and the like in a Universal Mobile Telecommunication System (UMTS) network. Future systems of LTE have also been studied for achieving a broader bandwidth and a higher speed based on LTE. Examples of the future systems of LTE include systems called LTE-Advanced (LTE-A), Future Radio Access (FRA), 5th generation mobile communication system (5G), 5G plus (5G+), Radio Access Technology (New-RAT), New Radio (NR), and the like.

In NR, for example, enhancement of a feedback function from a terminal to a base station has been discussed in order to improve the communication quality (e.g., see Non-Patent Literature (hereinafter, referred to as "NPL") 1).

Information to be fed back from the terminal to the base station is transmitted in a resource of a Physical Uplink Control Channel (PUCCH). Supporting PUCCH carrier switching has been agreed with respect to the extension of Ultra-Reliable and Low Latency Communications (URLLC) technology in Release 17 of 3GPP.

Citation List

Non-Patent Literature

NPL 1
"Enhanced Industrial Internet of Things (IoT) and ultra-reliable and low latency communication", RP-201310,3GPP TSG RAN Meeting #86e, 3GPP, July, 2020

Summary of Invention

Technical Problem

The PUCCH carrier switching includes dynamic PUCCH carrier switching and semi-static PUCCH carrier switching.

In the case of dynamic PUCCH carrier switching, a PUCCH carrier (cell) is indicated by control information for scheduling PUCCH, such as Downlink control information (DCI) or the like, and a terminal transmits, by using the PUCCH carrier (cell), a response signal for a received signal based on the dynamic scheduling.

However, some DCI formats cannot indicate a target PUCCH carrier (cell) by DCI. For example, DCI 1_0 does not support a target PUCCH cell field. Further, in DCI 1_1 and DCI 1_2, selection is possible whether or not to configure the target PUCCH cell field.

There is scope for further study on a transmission method for a response signal for a received signal based on the dynamic scheduling when a target PUCCH carrier (cell) is not indicated.

An aspect of the present disclosure is to provide a terminal and a radio communication method each for appropriately transmitting a response signal for a received signal based on the dynamic scheduling.

Solution to Problem

A terminal according to an aspect of the present disclosure includes: a reception section that receives a control signal and a dynamically scheduled signal; a control section that determines a transmission cell for a response signal, based on whether the transmission cell for the response signal in the dynamically scheduled signal is indicated by the control signal; and a transmission section that transmits the response signal on the cell that is determined by the control section.

A radio communication method according to an aspect of the present disclosure includes: receiving a control signal and a dynamically scheduled signal; determining a transmission cell for a response signal, based on whether the transmission cell for the response signal in the dynamically scheduled signal is indicated by the control signal; and transmitting the response signal on the cell that is determined.

Brief Description of Drawings

FIG. 1 illustrates an example of dual connectivity;
FIG. 2 illustrates an example of PUCCH carrier switching;
FIG. 3 is a diagram for describing an outline of a Type-1 HARQ-ACK CB;
FIG. 4 is a diagram for describing an outline of a Type-2 HARQ-ACK CB;
FIG. 5 is a diagram for describing a generation example of the Type-1 HARQ-ACK CB;
FIG. 6 is another diagram for describing a generation example of the Type-1 HARQ-ACK CB;
FIG. 7 is still another diagram for describing a generation example of the Type-1 HARQ-ACK CB;
FIG. 8 is a diagram for describing an example of HARQ-ACK ordering in a Type-1 HARQ-ACK CB for SPS PDSCHs;
FIG. 9 is a diagram for describing an example of Opt. 1;
FIG. 10 is a diagram for describing an example of Opt. 2;
FIG. 11 is a diagram for describing an operation example in Alt. 1 of Proposal 1;
FIG. 12 is a diagram for describing an operation example in Alt. 2 of Proposal 1;

FIG. 13 is a diagram for describing an example of Opt. 1 of Proposal 2;

FIG. 14 is a diagram for describing an example of Opt. 2-1 of Proposal 2;

FIG. 15 is a diagram for describing an example of Opt. 2-2 of Proposal 2;

FIG. 16 is a diagram for describing an example of Opt. 2-1 of Proposal 3;

FIG. 17 is a diagram for describing an example of Opt. 2-2 of Proposal 3;

FIG. 18 is another diagram for describing an example of Opt. 2-2 of Proposal 3;

FIG. 19 is a block diagram illustrating an example of a configuration of a base station according to the present embodiment;

FIG. 20 is a block diagram illustrating an example of a configuration of a terminal according to the present embodiment; and

FIG. 21 illustrates an exemplary hardware configuration of the base station and of the terminal according to an embodiment of the present disclosure.

Description of Embodiments

Hereinafter, an embodiment according to an aspect of the present disclosure will be described with reference to the accompanying drawings. 3GPP has been discussing a technology for a scheme called URLLC and Industrial Internet of Things (IIoT) in Rel. 17.

In URLLC, enhancement of a feedback function of a terminal for a Hybrid Automatic Repeat request-Acknowledgement (HARQ-ACK) has been studied. The HARQ-ACK is an example of information on a confirmation response (e.g., acknowledgement) to data received by the terminal. With respect to these study matters for URLLC, supporting dynamic and semi-static PUCCH carrier switching has been agreed. Note that, PUCCH carrier switching may be referred to as other names such as carrier switching for transmitting control information.

The PUCCH carrier switching is a technology to be applied in a case where a base station performs communication via a plurality of cells. Hereinafter, dual connectivity which is an example of the communication via a plurality of cells, and the PUCCH carrier switching will be described.

<Dual Connectivity>

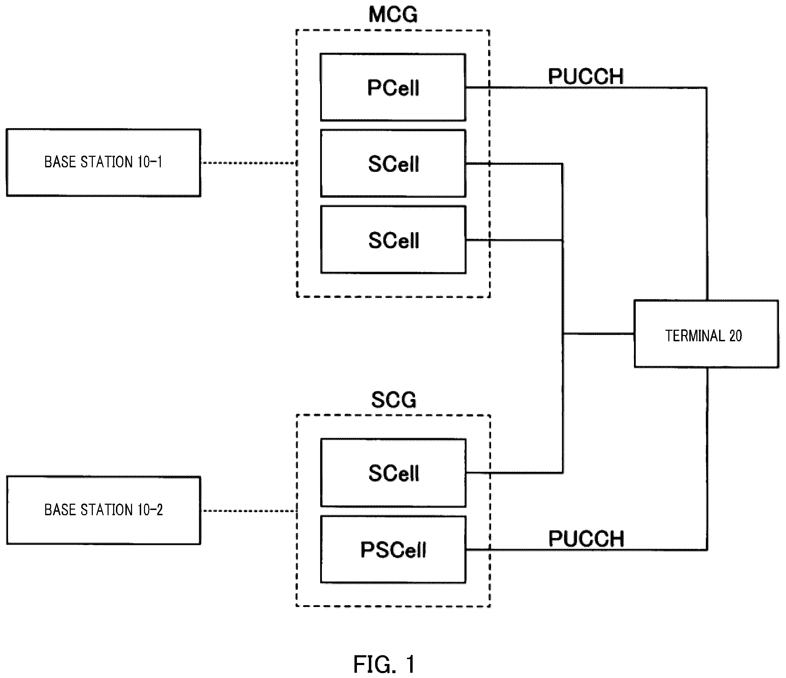

FIG. 1 illustrates an example of dual connectivity (DC). In the example of FIG. 1, base station 10-1 may be a Master Node (MN), and base station 10-2 may be a Secondary Node (SN). As illustrated in the example of FIG. 1, carriers between different base stations are aggregated in the DC.

In the example of FIG. 1, base station 10-1 communicates with terminal 20 via a primary cell (Pcell) and secondary cells (Scells). In the example of FIG. 1, terminal 20 has established an RRC connection with base station 10-1.

In the case of DC, a delay in communication between base stations 10-1 and 10-2 may be present, so that it is difficult indicate, to base station 10-2, uplink control information (e.g., Uplink Control Information: UCI) received in the Pcell of base station 10-1 via a backhaul link (e.g., a wired or wireless link connecting base stations 10-1 and 10-2) to reflect the uplink control information in scheduling of an Scell under base station 10-2. Accordingly, in the DC, one carrier under base station 10-2 may be configured to a Primary Scell (PScell) in addition to the Pcell of base station 10-1, and PUCCH transmission may be supported by the PScell. In this case, terminal 20 transmits UCI to base station 10-2 via the PScell.

In the example of FIG. 1, terminal 20 configures, in addition to the Pcell, the Scells to base station 10-1. Further, terminal 20 configures, in addition to the PScell, the Scell to base station 10-2. Terminal 20 transmits UCI of each carrier under base station 10-1 in PUCCH of the Pcell. Further, terminal 20 transmits UCI of each carrier under base station 10-2 in PUCCH of the PScell. In the example of FIG. 1, the cell group (CG) under base station 10-1 may be referred to as a Master Cell-Group (MCG), and the cell group under base station 10-2 may be referred to as a Secondary Cell-Group (SCG).

In a case where the DC is performed, terminal 20 may transmit PUCCH via a Pcell, a PScell, and/or a PUCCH-Scell. Generally, it is not assumed that terminal 20 transmits PUCCH via an Scell other than the Pcell, the PScell, and the PUCCH-Scell.

<PUCCH Carrier Switching>

The PUCCH carrier switching has been studied as a method of reducing latency in HARQ-ACK feedback in a Time Division Duplex (TDD) scheme.

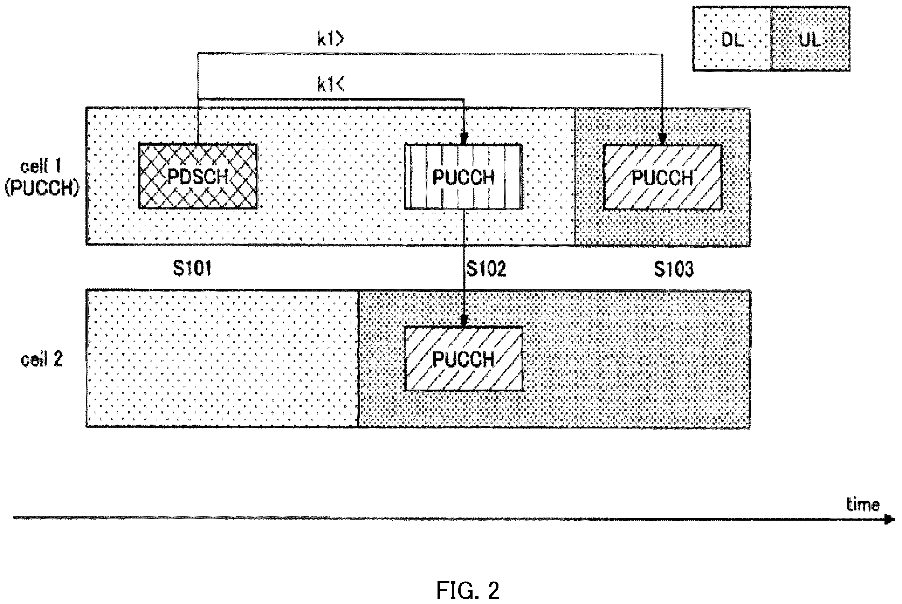

FIG. 2 illustrates an example of PUCCH carrier switching. In the example of FIG. 2, a base station and a terminal communicate via cells 1 and 2. In the example of FIG. 2, cell 1 is a Pcell and cell 2 is an Scell. Further, the example of FIG. 2 illustrates downlink (DL) slots and uplink (UL) slots in the cells.

In the example of FIG. 2, the terminal receives data (receives a Physical Downlink shared Channel (PDSCH)) at a timing of S101. The terminal attempts to transmit an HARQ-ACK for the data received at S101 at a timing of S102, but the slot on cell 1 at the timing of S102 is the downlink (DL) slot. For this reason, in a case where the terminal transmits an HARQ-ACK in cell 1, the terminal holds the HARQ-ACK transmission until a transmission timing of PUCCH in the uplink (UL) slot (e.g., timing of S103 of FIG. 2), so that latency in HARQ-ACK transmission increases. Note that, the PUCCH transmission timing in the uplink (UL) slot may be referred to as a PUCCH transmission occasion.

In the example of FIG. 2, the slot of cell 2 at the timing of S102 is the UL slot. In the example of FIG. 2, the latency in HARQ-ACK transmission can be reduced when the terminal can transmit an HARQ-ACK for the data received at S101 on the PUCCH transmission occasion at the timing of S102 of cell 2. In URLLC, low delay in a radio section is especially required. Accordingly, in 3GPP, the PUCCH carrier switching in which a terminal switches between carriers that perform PUCCH transmission has been studied as an extension of URLLC technology.

Note that, in the following embodiment, "the same timing" may be completely the same timing or may represent that all or some of time resources (for example, one or a plurality of symbol(s) (which may also be resources in time units shorter than symbols)) are the same or overlap.

The PUCCH carrier switching may also represent that in a case where a terminal attempts to perform PUCCH transmission at a specific transmission timing of a Pcell (which may be PScell or PUCCH-Scell), the terminal switches a cell for performing PUCCH transmission from the Pcell (which may be PScell or PUCCH-Scell) to an Scell (which is Scell other than PScell in the case of PScell and is Scell other than PUCCH-Scell in the case of PUCCH-Scell) of one or a plurality of Scell(s) in which a slot at the same timing as the specific transmission timing is a UL slot since the slot at the specific transmission timing of the Pcell (which may be PScell or PUCCH-Scell) is a DL slot. Note that, in an example of the present invention, the unit of the specific transmission timing is not limited to the slot. For example, the specific transmission timing may be a timing in units of subframes or may be a timing in units of symbols.

Two methods for achieving the PUCCH carrier switching have been studied. The first method is a method in which a base station dynamically indicates a carrier for performing PUCCH transmission to a terminal. The second method is a method in which a base station semi-statically configures a carrier for performing PUCCH transmission to a terminal. Note that, in an example described below, "PUCCH transmission" and "transmitting a PUCCH" may refer to transmission of uplink control information via PUCCH.

The terminal may indicate, to the base station, terminal capability information (UE capability) that defines information on capability of the terminal for the PUCCH transmission.

For example, information indicating whether the terminal supports switching between configurations related to transmission of control information may be defined as the UE capability of the terminal. Switching between configurations related to transmission of control information may be, for example, switching between resources (e.g., carriers or cells) used for transmitting control information. Switching between resources used for transmitting control information may also be referred to as "PUCCH carrier switching." Further, information indicating application of dynamic PUCCH carrier switching and/or semi-static PUCCH carrier switching may be defined as the UE capability of the terminal.

Configuration operation of the semi-static PUCCH carrier switching may be based on RRC for which a PUCCH cell timing pattern is configured of a PUCCH cell, to which the semi-static PUCCH carrier switching is applied. Further, the configuration operation of the semi-static PUCCH carrier switching may be supported between cells of different numerologies.

In the PUCCH carrier switching, PUCCH resources may be configured per Uplink Bandwidth Part (UL BWP) (e.g., per candidate cell and per UL BWP of candidate cell).

In the case of PUCCH carrier switching based on dynamic indication of control information, a K1 value (offset) from PDSCH to an HARQ-ACK may be interpreted based on numerology of a target PUCCH cell to be dynamically indicated. Note that, the control information may be control information for PUCCH scheduling, such as Downlink Control Information (DCI). Further, the numerology may be regarded as a slot or a Subcarrier Spacing (SCS).

In URLLC, enhancement of the function of HARQ-ACK Codebook (HARQ-ACK CB) feedback of a terminal has been studied. Hereinafter, the outlines of a Type-1 HARQ-ACK CB and a Type-2 HARQ-ACK CB will be described (see 3GPP TS38.213 (Rel.16) for more details).

Note that, the Type-1 HARQ-ACK CB may be referred to as a semi-static HARQ-ACK CB. The Type-2 HARQ-ACK CB may be referred to as a dynamic HARQ-ACK CB. The terminal may be indicated by higher layer signaling such as RRC, as to which of the Type-1 HARQ-ACK CB and the Type-2 HARQ-ACK CB is applied.

<Type-1 HARQ-ACK CB>

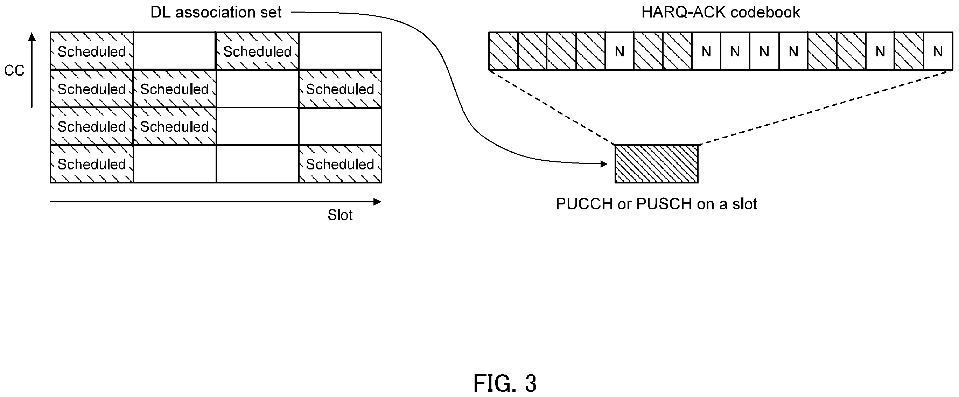

FIG. 3 is a diagram for describing an outline of the Type-1 HARQ-ACK CB. The terms "scheduled" illustrated in FIG. 3 each represent, for example, a slot scheduled by DCI. The CC represents a Component Carrier.

In the Type-1 HARQ-ACK CB, the terminal generates HARQ-ACK bits for PDSCH regardless of whether a scheduled slot (PDSCH) is present. For example, as illustrated in the "HARQ-ACK codebook" in FIG. 3, the terminal may configure NACKs in unscheduled PDSCH.

<Type-2 HARQ-ACK CB>

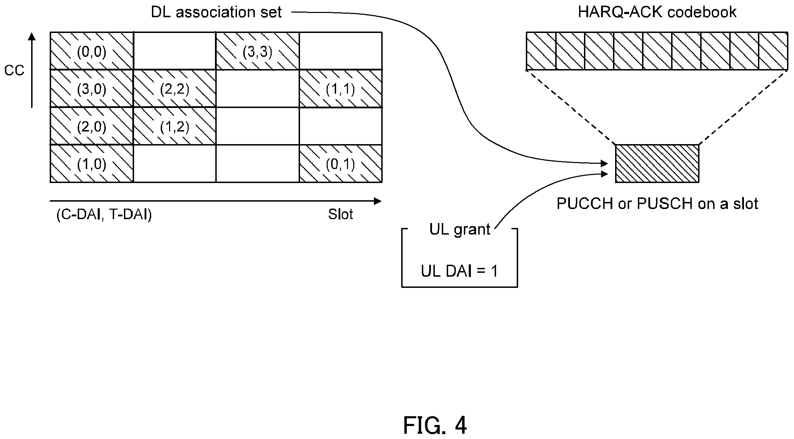

FIG. 4 is a diagram for describing an outline of the Type-2 HARQ-ACK CB. The coodinates (x, y) illustrated in FIG. 4 represent, for example, a slot scheduled by DCI. The x corresponds to a C-DAI value and the y corresponds to a T-DAI value. The DAI is abbreviation for a Downlink assignment index. The DAI represents, for example, assignment of a scheduled PDSCH in which an HARQ-ACK is bundled to an HARQ-ACK CB.

In the Type-2 HARQ-ACK CB, the terminal generates HARQ-ACK bits for a scheduled PDSCH. For example, as illustrated in the "HARQ-ACK codebook" in FIG. 4, the terminal may configure an HARQ-ACK for a scheduled PDSCH.

Note that, the C-DAI is counted up from one. For example, in the case of a two-bit field, the C-DAI is repeated as in 1->2->3->0-> and so forth. The C-DAI is counted up per slot and per DCI reception occasion of each CC, and is counted up from the final value of the previous slot even when the slot changes. The T-DAI represents the final C-DAI value of each slot.

Next, a generation example of the Type-1 HARQ-ACK CB will be described.

<Generation of Type-1 HARQ-ACK CB>

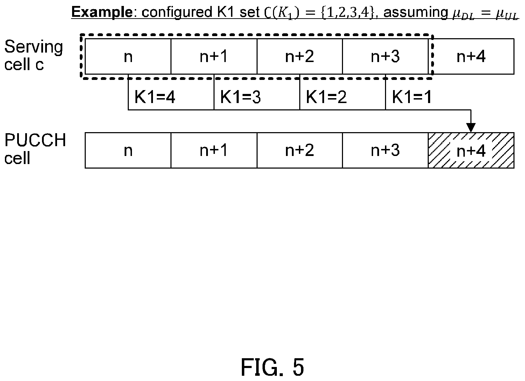

FIGS. 5, 6, and 7 are diagrams each for describing a generation example of the Type-1 HARQ-ACK CB. FIG. 5 assumes that numerology of a serving cell and numerology of a PUCCH cell are the same. In FIG. 5, the K1 (offset from PDSCH to HARQ-ACK) set is {1,2,3,4}.

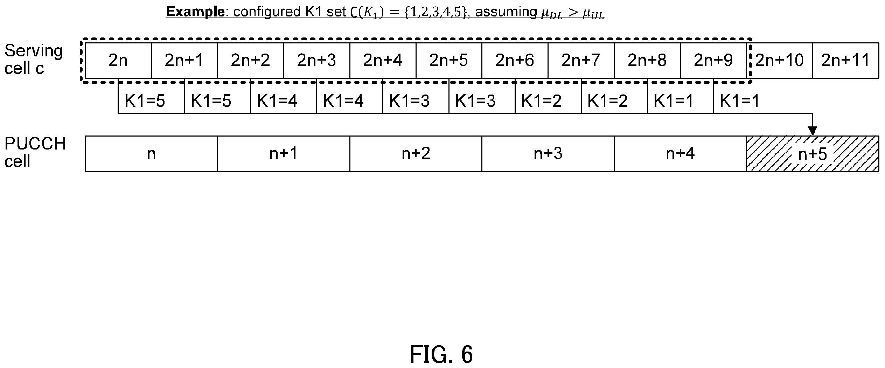

FIG. 6 assumes that numerology of a serving cell is different from numerology of a PUCCH cell. In FIG. 6, the K1 set is {1, 2, 3, 4, 5}.

The terminal may generate an HARQ-ACK CB based on Step A, Step A-1, Step A-2, and Step B described below.

- Step A

The terminal determines an HARQ-ACK occasion for candidate PDSCH reception. For example, in FIG. 5, the terminal determines the n+4 slot on the PUCCH cell. For example, in FIG. 6, the terminal determines the n+5 slot on the PUCCH cell.

- Step A-1

The terminal determines a PDSCH slot window based on a K1 set. For example, the terminal interprets the K1 set in numerology of a PUCCH cell and determine the PDSCH slot window indicated by the dotted frame of FIG. 5 or 6.

- Step A-2

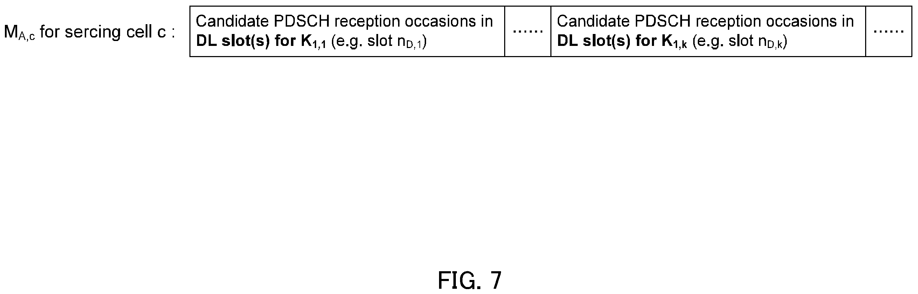

The terminal determines a candidate PDSCH reception occasion in each slot for each K1. For example, as illustrated in $M_{A,c}$ in FIG. 7, the terminal determines a candidate PDSCH reception occasion in each slot.

Note that, the candidate PDSCH reception occasion is related to a set R (Row index) of a Time Domain Resource Allocation (TDRA) table. A candidate PDSCH reception occasion in a TDRA table, which overlaps with UL configured by TDD-UL-DL-ConfigurationCommon and TDD-UL-DL-ConfigDedicated, is excluded. With respect to candidate PDSCH reception occasions overlapping in a time domain, the candidate PDSCH reception occasion is determined based on a specific rule.

- Step B

The terminal may determine (generate) an HARQ-ACK (HARQ-ACK information bits, HARQ-ACK CB) in each element of a determined candidate PDSCH reception occasion. For example, the terminal may generate the following Type-1 HARQ-ACK CB in total number $O^{ACK}$ of HARQ-ACK information bits.

[1]

$$\tilde{O}_0^{ACK}, \tilde{O}_1^{ACK}, ..., \tilde{O}_{O^{ACK}-1}^{ACK} \quad ... \text{ (Equation 1)}$$

Next, a generation example of an SPS HARQ-ACK CB will be described. Note that, the SPS HARQ-ACK CB may be regarded as a CB for an HARQ-ACK in an SPS PDSCH. For example, a transmission periodicity for the SPS PDSCH is configured by RRC. Further, a transmission timing (K1) of an HARQ-ACK for the SPS PDSCH is configured by RRC, for example. The SPS PDSCH is activated (activation) and deactivated (deactivation/release) by DCI, for example. Hereinafter, the DCI that deactivates the SPS PDSCH may be referred to as deactivation DCI. The terminal also transmits an HARQ-ACK for the deactivation DCI.

<Type 2 HARQ-ACK CB or type 1 HARQ-ACK CB with only SPS PDSCH receptions>

For the Type-1 HARQ-ACK CB only in SPS PDSCH reception, HARQ-ACKs may be ordered as follows.

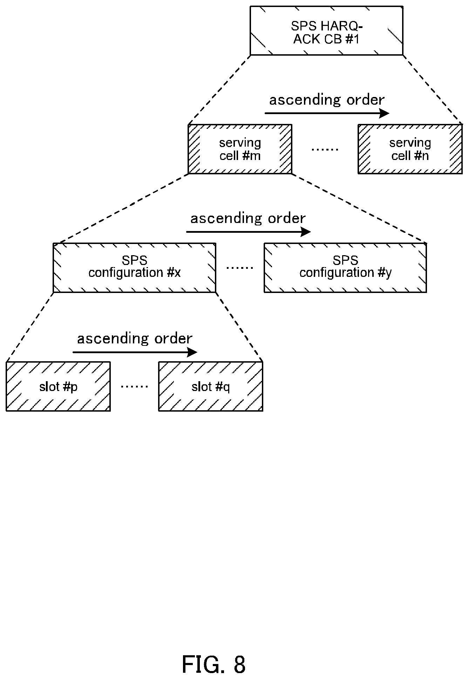

FIG. 8 is a diagram for describing an example of HARQ-ACK ordering in a Type-1 HARQ-ACK CB for SPS PDSCHs. HARQ-ACKs for SPS PDSCHs are arranged in ascending order of DL slot numbers in each SPS configuration index of each serving cell index. The HARQ-ACKs for the SPS PDSCHs are then arranged in ascending order of the SPS configuration indexes in each serving cell index. The HARQ-ACKs for the SPS PDSCHs are then arranged in ascending order of the serving cell indexes.

In the Type-2 HARQ-ACK CB in SPS PDSCH reception, HARQ-ACKs may be ordered in the same way as in the Type-1 HARQ-ACK CB described above. Note that, in the Type-2 HARQ-ACK CB, in a case where an HARQ-ACK in SPS PDSCH reception is multiplexed with an HARQ-ACK for a dynamically scheduled PDSCH reception and/or an HARQ-ACK for deactivation DCI, the HARQ-ACK (bits) in the SPS PDSCH reception is added following (temporally following) the HARQ-ACK (bits) for the dynamically scheduled PDSCH reception and/or the HARQ-ACK (bits) for the deactivation DCI.

<Multiplexing of Dynamic and/or SPS HARQ-ACK(s)>

Meanwhile, when the base station can indicate a target PUCCH carrier (cell) to the terminal by DCI, an overlap of slots of dynamic HARQ-ACKs (e.g., HARQ-ACKs in which transmission timing is dynamically determined (scheduled) by DCI) in different carriers (cells) may not be assumed in the terminal. In other words, in the terminal, an overlap between dynamic HARQ-ACK slots in different carriers is not assumed.

Further, in the terminal, an overlap of SPS HARQ-ACK slots in different carriers may not be assumed. In other words, in the terminal, an overlap between SPS HARQ-ACK slots in different carriers may not be assumed.

Thus, the terminal may transmit a dynamic HARQ-ACK and an SPS HARQ-ACK in a multiplexed manner assuming an overlap between a dynamic HARQ-ACK slot and an SPS HARQ-ACK slot.

For example, in a case where a dynamic HARQ-ACK slot and an SPS HARQ-ACK slot overlap on the same carrier, the terminal may multiplex the dynamic HARQ-ACK and the SPS HARQ-ACK and transmit the dynamic HARQ-ACK and the SPS HARQ-ACK. Specifically, in a case where a dynamic HARQ-ACK slot and an SPS HARQ-ACK slot overlap in the same slot of a ceitain carrier, the terminal may transmit a dynamic HARQ-ACK and an SPS HARQ-ACK in a multiplexed manner in the same slot of the ceitain carrier.

Further, for example, in a case where a dynamic HARQ-ACK slot and an SPS HARQ-ACK slot overlap on different carriers, the terminal may transmit a dynamic HARQ-ACK and an SPS HARQ-ACK in a multiplexed manner based on the following Opt. 1 or Opt. 2.

<Opt. 1>

The terminal may map slots of a dynamic HARQ-ACK and an SPS HARQ-ACK in slots of dedicated cells corresponding to slots of the dynamic HARQ-ACK and the SPS HARQ-ACK (may transmit dynamic HARQ-ACK and SPS HARQ-ACK in a multiplexed manner).

The dedicated cell may be a default cell defined in the specifications. For example, the dedicated cell may be a Pcell, a Pscell, or a PUCCH-Scell. The dedicated cell may be configured based on RRC.

For the dedicated cell, a cell having the largest SCS may be selected, for example. Thus, the delay in an HARQ-ACK of the terminal can be suppressed.

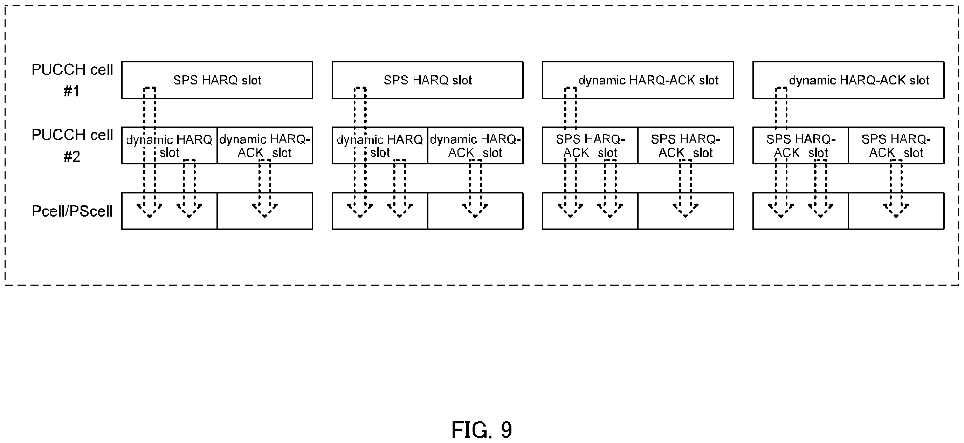

FIG. 9 is a diagram for describing an example of Opt. 1. In FIG. 9, numerology of PUCCH cell #1 is different from numerology of PUCCH cell #2. In FIG. 9, four examples are illustrated in which dynamic HARQ-ACK slots and SPS HARQ-ACK slots overlap on different carriers (PUCCH cell #1 and PUCCH cell #2). The dynamic HARQ-ACK and the SPS HARQ-ACK, which overlap on the different carriers, may be mapped to slots of dedicated cells (in FIG. 9, PCell/PScell) corresponding to the slots of the dynamic HARQ-ACK and the SPS HARQ-ACK.

<Opt. 2>

The SPS HARQ-ACK may be multiplexed in a corresponding dynamic HARQ-ACK slot. In other words, the terminal may multiplex the SPS HARQ-ACK with the dynamic HARQ-ACK and transmit the SPS HARQ-ACK and the dynamic HARQ-ACK, in the dynamic HARQ-ACK slot corresponding to the SPS HARQ-ACK slot.

<Opt. 2-1>

In a case where one SPS HARQ-ACK slot overlaps with a plurality of dynamic HARQ-ACK slots, the terminal may multiplex the SPS HARQ-ACK and the dynamic HARQ-ACK based on the following Alt. 1 or Alt. 2.

<Alt. 1>

The terminal may multiplex an SPS HARQ-ACK with a dynamic HARQ-ACK in the first dynamic HARQ-ACK slot or in the last dynamic HARQ-ARQ slot among the plurality of dynamic HARQ-ACK slots corresponding to (overlapping with) one SPS HARQ-ACK slot.

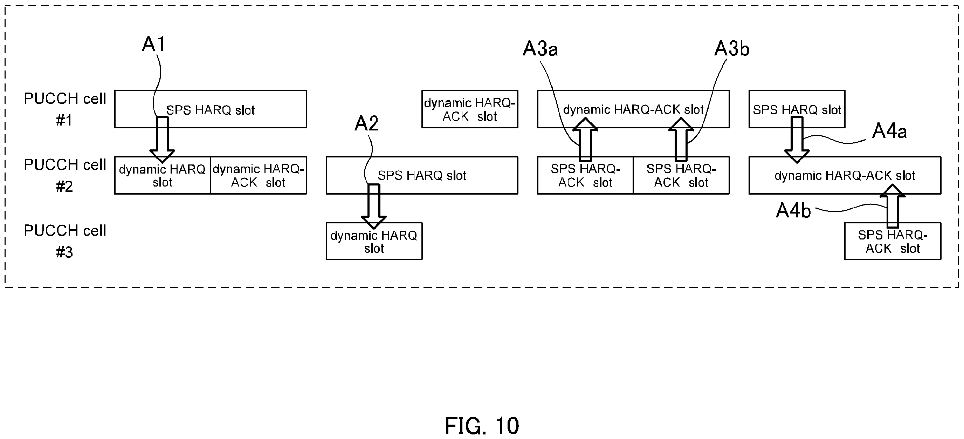

FIG. 10 is a diagram for describing an example of Opt. 2. In FIG. 10, numerology of PUCCH cell #1 is different from numerology of PUCCH cell #2. In FIG. 10, four examples are illustrated in which dynamic HARQ-ACK slots and SPS HARQ-ACK slots overlap on different carriers (PUCCH cell #1 and PUCCH cell #2).

For example, as illustrated by arrow A1 in FIG. 10, the terminal may multiplex the SPS HARQ-ACK and the dynamic HARQ-ACK in the first dynamic HARQ-ACK slot of the two dynamic HARQ-ACK slots overlapping with one SPS HARQ-ACK slot. Further, as illustrated by arrow A2 in FIG. 10, the terminal may multiplex the SPS HARQ-ACK with the dynamic HARQ-ACK in the first dynamic HARQ-ACK slot of the two dynamic HARQ-ACK slots overlapping with one SPS HARQ-ACK slot.

<Alt. 2>

The terminal may multiplex an SPS HARQ-ACK with a dynamic HARQ-ACK in a dynamic HARQ-ACK slot having the smallest cell index, the largest cell index, or the nearest cell index among the plurality of dynamic HARQ-ACK slots corresponding to one SPS HARQ-ACK slot.

For example, as illustrated by arrow A2 in FIG. 10, the terminal may multiplex an SPS HARQ-ACK with a dynamic HARQ-ACK in a dynamic HARQ-ACK slot having the largest cell index (cell index #3) among the two dynamic HARQ-ACK slots (cell indexes #1 and #3) corresponding to one SPS HARQ-ACK slot.

<Opt. 2-2>

In a case where a plurality of SPS HARQ-ACK slots overlaps with the same (one) dynamic HARQ-ACK slot, the terminal may multiplex the SPS HARQ-ACKs and dynamic HARQ-ACK based on the following Alt. 1 or Alt. 2.

<Alt. 1>

When the plurality of SPS HARQ-ACK slots overlaps with the same dynamic HARQ-ACK slot, the terminal may handle it as an error.

<Alt.2>

When the plurality of SPS HARQ-ACK slots overlaps with the same dynamic HARQ-ACK slot, the terminal may multiplex the SPS HARQ-ACKs of the plurality of SPS HARQ-ACK slots with the dynamic HARQ-ACK of the same dynamic HARQ-ACK slot.

For example, as illustrated in arrows A3a and A3b in FIG. 10, the terminal may multiplex the plurality of SPS HARQ-ACKs with the dynamic HARQ-ACK of the same dynamic HARQ-ACK slot. Further, as illustrated in arrows A4a and A4b in FIG. 10, the terminal may multiplex the plurality of SPS HARQ-ACKs with the dynamic HARQ-ACK of the same dynamic HARQ-ACK slot.

<Opt. 3>

The dynamic HARQ-ACK may be multiplexed in a corresponding SPS HARQ-ACK slot. In other words, the terminal may multiplex the dynamic HARQ-ACK with the SPS HARQ-ACK in the slot of the SPS HARQ-ACK corresponding to the slot of the dynamic HARQ-ACK. For example, the "dynamic HARQ-ACK" described in Opt. 2 may be replaced with the "SPS HARQ-ACK," and the "SPS HARQ-ACK" described in Opt. 2 may be replaced with the "dynamic HARQ-ACK."

Incidentally, in multiplexing between a dynamic HARQ-ACK slot and an SPS HARQ-ACK slot, a carrier (cell) in which the SPS HARQ-ACK slot is transmitted may be different from a carrier in which SPS PDSCH is transmitted (i.e., PUCCH carrier switching may be performed). A carrier in which the dynamic HARQ-ACK slot is transmitted may be different from a carrier in which dynamic PDSCH (PDSCH scheduled by DCI) is transmitted (i.e., PUCCH carrier switching may be performed).

There is scope for further study on, however, generation of an HARQ-ACK CB when a dynamic HARQ-ACK slot and an SPS HARQ-ACK slot overlap on different cells. In the present embodiment, an HARQ-ACK CB is appropriately generated in multiplexing between a dynamic HARQ-ACK slot and an SPS HARQ-ACK slot that overlap on different cells.

<Proposal 1>

Proposal 1 describes multiplexing of a Type-2 HARQ-ACK CB when a dynamic HARQ-ACK slot and an SPS HARQ-ACK slot are multiplexed in different PUCCH cells.

In the Type-2 HARQ-ACK CB, the terminal may add an SPS HARQ-ACK CB following a dynamic HARQ-ACK CB.

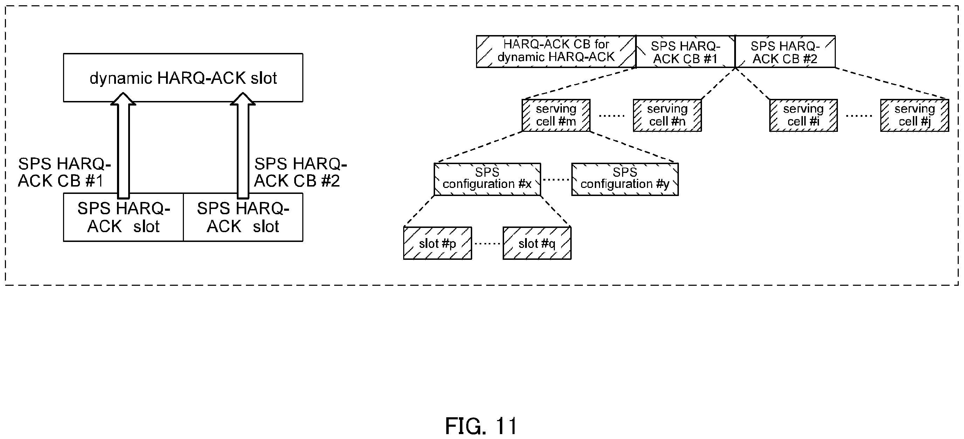

When multiplexing a plurality of SPS HARQ-ACK CBs from different slots with the same HARQ-ACK CB on the dynamic HARQ-ACK slot, the terminal may multiplex based on the following Alt. 1 or Alt. 2. The plurality of SPS HARQ-ACK CBs from the different slots may be a plurality of SPS HARQ-ACK CBs of different slots on the same PUCCH cell (see, for example, figure on left side of FIG. 11) or a plurality of SPS HARQ-ACK CBs on different PUCCH cells (see, for example, second figure from left of FIG. 10 and figure on right side of FIG. 10).

<Alt. 1>

The terminal may add the plurality of SPS HARQ-ACK CBs (a plurality of original SPS HARQ-ACK CBs) one by one following the dynamic HARQ-ACK CB.

The order of the plurality of SPS HARQ-ACK CBs may be determined based on the beginning and/or end of the original SPS HARQ-ACK slots (time-lapse order and/or reverse order thereof). The order of the plurality of SPS HARQ-ACK CBs may also be determined based on the cell indexes of SPS HARQ-ACK slots.

FIG. 11 is a diagram for describing an operation example in Alt. 1 of Proposal 1. On a left side of FIG. 11, an example is indicated of different SPS HARQ-ACK slots on the same PUCCH cell. The dynamic HARQ-ACK slot illustrated on the left side of FIG. 11 and the two SPS HARQ-ACK slots are on different PUCCH cells. The SPS HARQ-ACK slot in which SPS HARQ-ACK CB #1 is transmitted and the SPS HARQ-ACK slot in which SPS HARQ-ACK CB #2 is transmitted overlap with the dynamic HARQ-ACK slot in which the dynamic HARQ-ACK CB is transmitted.

The terminal may add SPS HARQ-ACK CB #1 and SPS HARQ-ACK CB #2 of the two SPS HARQ-ACK slots one by one following the dynamic HARQ-ACK CB, as illustrated in the figure on a right side of FIG. 11. In the example of FIG. 11, according to the time-lapse order of the two SPS HARQ-ACK slots, SPS HARQ-ACK CB #1 is firstly added following the dynamic HARQ-ACK CB, and SPS HARQ-ACK CB #2 is added following SPS HARQ-ACK CB #1.

<Alt. 2>

In accordance with the ordering defined by TS38.213 in Rel. 16, the terminal may rearrange (re-order) HARQ-ACK bits of the plurality of SPS HARQ-ACK CBs and generate (regenerate) an SPS HARQ-ACK CB.

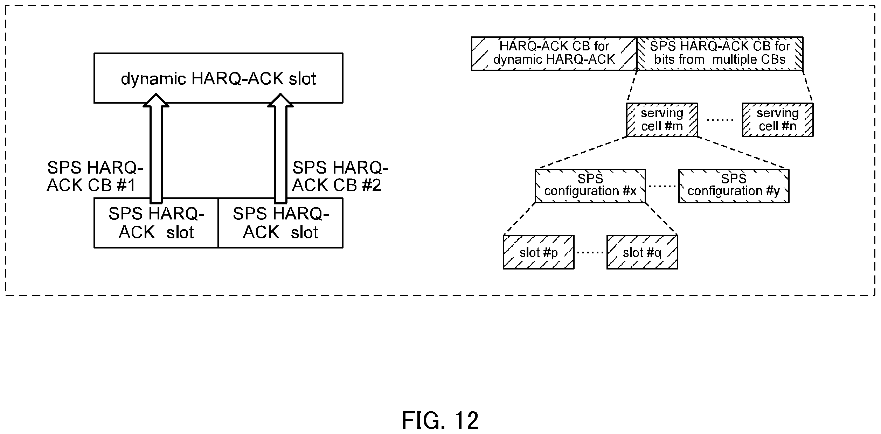

FIG. 12 is a diagram for describing an operation example in Alt. 2 of Proposal 1. In Alt. 2, SPS HARQ-ACKs of SPS HARQ-ACK CB #1 and SPS HARQ-ACK CB #2 illustrated on the left side of FIG. 12 may be re-ordered in accordance with the ordering defined by TS38.213 in Rel. 16. That is, the terminal may re-order the SPS HARQ-ACKs of SPS HARQ-ACK CB #1 and SPS HARQ-ACK CB #2 together and thereby generate one SPS HARQ-ACK CB. The terminal may add the generated SPS HARQ-ACK CB following the dynamic HARQ-ACK CB.

In Proposal 1, a dynamic HARQ-ACK CB and an SPS HARQ-ACK CB may be multiplexed in the same PUCCH cell as that of the dynamic HARQ-ACK slot or may be multiplexed in the same PUCCH cell as that of the SPS HARQ-ACK slot. The dynamic HARQ-ACK CB and the SPS HARQ-ACK CB may also be multiplexed in a cell different from PUCCH cells for the dynamic HARQ-ACK slot and the SPS HARQ-ACK slot.

In addition, a case has been described where an SPS HARQ-ACK CB is added following a dynamic HARQ-ACK CB, but the present disclosure is not limited to this case. The dynamic HARQ-ACK CB may be added following the SPS HARQ-ACK CB.

<Proposal 2>

Proposal 2 describes multiplexing of the Type-1 HARQ-ACK CB when a dynamic HARQ-ACK slot and an SPS HARQ-ACK slot are multiplexed in different PUCCH cells. Note that, the dynamic HARQ-ACK slot may be referred to as a reporting slot. A target cell may be regarded as a cell that transmits PUCCH (UCI such as HARQ-ACK and/or HARQ-ACK CB).

<Opt. 1>

In Opt. 1, determination of a candidate PDSCH slot set window may be extended. In Opt. 1, a candidate PDSCH slot corresponding to a slot on another PUCCH cell (SPS HARQ-ACK cell) that overlaps with a reporting slot may be added to the candidate PDSCH slot set for generation of the Type-1 HARQ-ACK CB.

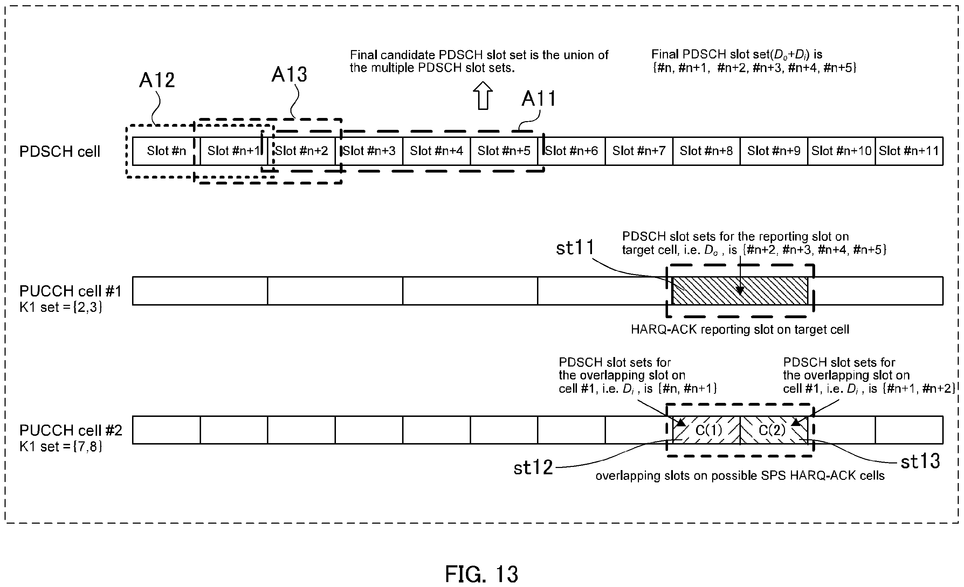

FIG. 13 is a diagram for describing an example of Opt. 1 of Proposal 2. The terminal may determine (generate) a candidate PDSCH slot set based on the following Step 1 to Step 4.

- Step 1

The terminal determines a candidate PDSCH slot set for a dynamic HARQ-ACK slot on a target cell based on a K1 set for the target cell. Here, the determined PDSCH candidate slot set is referred to as $D_0$.

For example, in FIG. 13, a candidate PDSCH slot set for the dynamic HARQ-ACK slot on PUCCH cell #1 (st11 illustrated in FIG. 13) is a slot surrounded by dotted frame A11, from "K1 set = 2, 3." Hence, PDSCH candidate slot set $D_0$ becomes {#n+2, #n+3, #n+4, #n+5}.

- Step 2

The terminal searches for an SPS HARQ-ACK slot on an SPS HARQ-ACK cell that overlaps with the dynamic HARQ-ACK slot on the target cell. Here, an overlapping slot set on the SPS HARQ-ACK PUCCH cell is assumed as C. Incidentally, i in C(i) denotes an i-th slot in the set.

For example, in FIG. 13, SPS HARQ-ACK slots on the SPS HARQ-ACK cell (PUCCH cell #2) overlapping with the dynamic HARQ-ACK slot are st12 and st13. Thus, overlapping slot set C on the SPS HARQ-ACK PUCCH cell corresponds to st12 and st13. C(1) = st12 and C(2) = st13.

- Step 3

The terminal determines a candidate PDSCH slot set for each slot of set C, based on the K1 set configured for the corresponding PUCCH cell. The PDSCH slot set determined for slot C(i) is assumed Di.

For example, in FIG. 13, the K1 set for PUCCH cell of set C is "K1 set = 7, 8." Hence, the candidate PDSCH slot set Di for slot C(1) becomes a slot surrounded by dotted frame A12, that is {#n, #n+1}. Candidate PDSCH slot set Di for slot C(2) becomes a slot surrounded by dotted frame A13, that is {#n+1, #n+2}.

- Step 4

The terminal determines a union of $D_0$ and each Di as a final candidate PDSCH slot set.

For example, in FIG. 13, the union of $D_0$ {#n+2, #n+3, #n+4, #n+5}, Di {#n, #n+1 }, and Di {#n+1, #n+2} is {#n, #n+1, #n+2, #n+3, #n+4, #n+5}. Thus, the final candidate PDSCH slot set becomes {#n, #n+1, #n+2, #n+3, #n+4, #n+5}.

For the determined final candidate PDSCH slot set, the terminal determines a candidate PDSCH reception occasion ($M_{A,c}$) based on, for example, the rules of TS38.213 in Rel. 16. The terminal determines (generates) an HARQ-ACK for each element of the determined candidate PDSCH reception occasion and generates a Type-1 HARQ-ACK CB.

The generated Type-1 HARQ-ACK CB may be generated in the same PUCCH cell as that of the dynamic HARQ-ACK slot or may be generated in the same PUCCH cell as that of the SPS HARQ-ACK slot. Further, the generated Type-1 HARQ-ACK CB may be generated in a cell different from PUCCH cells for the dynamic HARQ-ACK slot and the SPS HARQ-ACK slot.

Further, SPS HARQ-ACK slots may be present on different cells. For example, slots st12 and st13 illustrated in FIG. 13 may be present on different cells.

<Opt. 2>

The terminal may add a CB for an SPS HARQ-ACK slot on another PUCCH cell that overlaps with a dynamic HARQ-ACK slot on a target cell, following a Type-1 HARQ-ACK CB (original Type-1 HARQ-ACK CB) for the dynamic HARQ-ACK slot on the target cell.

<Opt. 2-1>

The terminal may generate a specific HARQ-ACK CB for each slot on different cells.

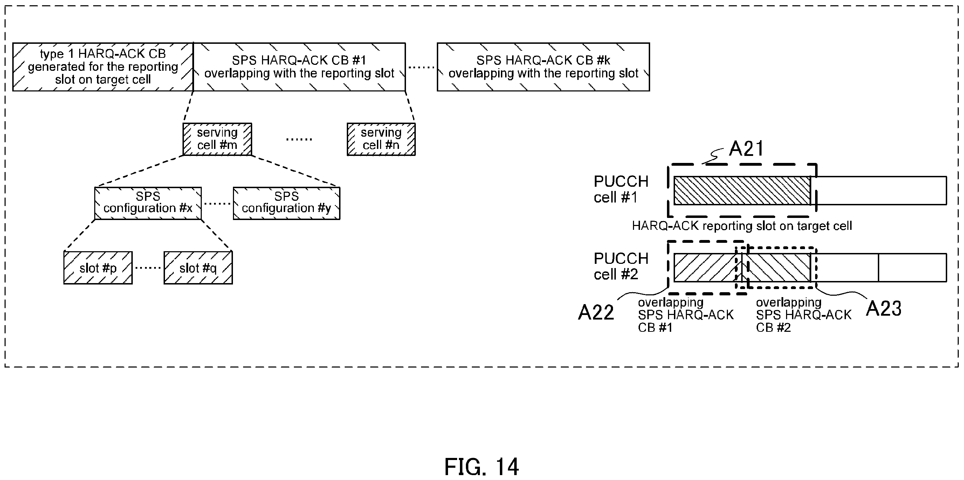

FIG. 14 is a diagram for describing an example of Opt. 2-1 of Proposal 2. The terminal may multiplex the dynamic HARQ-ACK CB and the SPS HARQ-ACK CB based on the following Step 1 to Step 3:

- Step 1

The terminal generates, for example, a Type-1 HARQ-ACK CB (dynamic HARQ-ACK CB) for the dynamic HARQ-ACK slot on the target cell according to the rules of TS38.213 in Rel. 16.

For example, a terminal generates the Type-1 HARQ-ACK CB (type 1 HARQ-ACK CB illustrated in FIG. 14) for the dynamic HARQ-ACK slot indicated by dotted frame A21 of FIG. 14.

- Step 2

The terminal generates an SPS HARQ-ACK CB for each SPS HARQ-ACK slot on different cells that overlaps with the dynamic HARQ-ACK slot on the target cell.

For example, the terminal generates an SPS HARQ-ACK CB (SPS HARQ-ACK CB #1 illustrated in FIG. 14) for the SPS HARQ-ACK slot indicated by dotted frame A22 of FIG. 14. Further, the terminal generates an SPS HARQ-ACK CB (SPS HARQ-ACK CB #1 illustrated in FIG. 14) for the SPS HARQ-ACK slot indicated by dotted frame A23 of FIG. 14. Incidentally, ordering HARQ-ACKs for the SPS HARQ-ACK CBs may be performed in accordance with the manner described in FIG. 8.

- Step 3

The terminal adds the SPS HARQ-ACK CBs generated in Step 2 following the Type-1 HARQ-ACK CB (original Type-1 HARQ-ACK CB) generated in Step 1.

For example, the terminal adds SPS HARQ-ACK CB #1 for the SPS HARQ-ACK slot indicated by dotted frame A22 following the Type 1 HARQ-ACK CB illustrated in FIG. 14. The terminal adds SPS HARQ-ACK CB #2 for the SPS HARQ-ACK slot indicated by dotted frame A23 following SPS HARQ-ACK CB #1 illustrated in FIG. 14.

In a case where a plurality of SPSHARQ-ACK CBs are added, the order of the plurality of SPSHARQ-ACK CBs may be determined based on SPS HARQ-ACK cell indexes and/or the beginning and/or end of the SPS HARQ-ACK slots (time-lapse order and/or reverse order thereof).

In addition, a case has been described where an SPS HARQ-ACK CB is added following a Type-1 HARQ-ACK CB, but the present disclosure is not limited to this case. The Type-1 HARQ-ACK CB may be added following the SPS HARQ-ACK CB.

<Opt. 2-2>

The terminal may add one SPS HARQ-ACK CB (single SPSHARQ-ACK CB) on the SPS HARQ-ACK cell following the Type-1 HARQ-ACK CB (dynamic HARQ-ACK CB) on the target PUCCH cell.

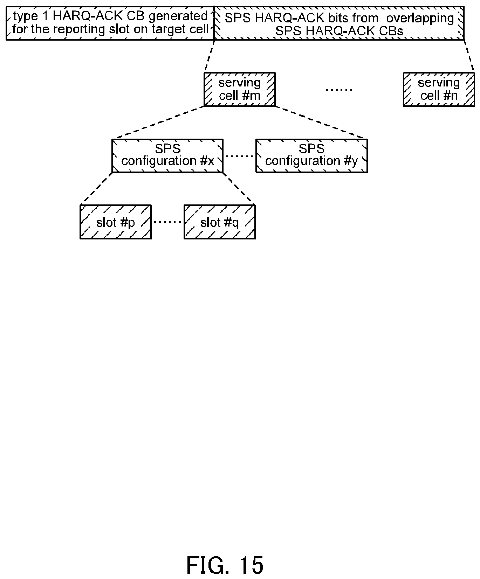

FIG. 15 is a diagram for describing an example of Opt. 2-2 of Proposal 2. The terminal may multiplex the dynamic HARQ-ACK CB and the SPS HARQ-ACK CB based on the following Step 1 to Step 4.

- Step 1

The terminal generates a Type-1 HARQ-ACK CB for the dynamic HARQ-ACK slot on the target cell according to, for example, the rules of TS38.213 in Rel. 16. For example, the terminal generates the Type-1 HARQ-ACK CB illustrated in FIG. 15.

- Step 2

The terminal determines a corresponding candidate SPS PDSCH occasion for each slot on an SPS HARQ-ACK cell that overlaps with the dynamic HARQ-ACK slots on the target cell.

- Step 3

The terminal determines a union of the candidate SPS PDSCH occasions determined in Step 2 and re-orders HARQ-ACK bits for the candidate SPS PDSCH occasions in the union. The HARQ-ACK bits may be re-ordered in accordance with, for example, the manner described in FIG. 8.

- Step 4

The terminal adds the single SPS HARQ-ACK CB generated in Step 3 following the Type-1 HARQ-ACK CB on the target PUCCH cell.

For example, the terminal adds the single SPS HARQ-ACK CB following the Type-1 HARQ-ACK CB illustrated in FIG. 15.

<Proposal 3>

In a case where the DCI format does not support/configure a target PUCCH cell field, a target PUCCH carrier (cell) is not indicated to the terminal by DCI.

In Proposal 3, a transmission method for a dynamic HARQ-ACK slot when the dynamical PUCCH carrier switching is enabled while the target PUCCH carrier (cell) is not indicated.

<Proposal 3-1>

In Proposal 3-1, a configuration method for a PUCCH carrier (cell) for a dynamic HARQ-ACK slot when the target PUCCH carrier (cell) is not indicated.

In the dynamic PUCCH carrier switching, a case where the PUCCH carrier (cell) is indicated (e.g., "target PUCCH cell field" is configured for DCI 1_1) and a case where the PUCCH carrier (cell) is not indicated (e.g., DCI format is DCI1_0) are assumed.

In this instance, K1 for the dynamic HARQ-ACK slot when the PUCCH carrier (cell) is not indicated (hereinafter referred to as "non-indicated dynamic HARQ-ACK slot") may be interpreted based on a K1 set in which the target cell (reference cell) for the dynamic HARQ-ACK slot when the PUCCH carrier (cell) is indicated (hereinafter referred to as "indicated dynamic HARQ-ACK slot") is configured and the SCS of the target cell (reference cell).

Further, a PUCCH resource for the non-indicated dynamic HARQ-ACK slot is determined on the target cell (reference cell) based on the following Opt. 1 to Opt. 4, and a PUCCH Resource Indicator (PRI) thereof may be interpreted on the target cell (reference cell).

<Opt. 1>

The target cell (reference cell) may be configured by default. For example, a Pcell, a Pscell, or a PUCCH-Scell may be always configured as the target cell (reference cell).

<Opt. 2>

A target PUCCH cell indicated by the last DCI having a target PUCCH cell field detected prior to detection of the current DCI may be configured as the target cell (reference cell).

<Opt. 3>

A target PUCCH cell used for transmitting the last PUCCH having the (dynamic) HARQ-ACK slot reported prior to detection of the current DCI may be configured as the target cell (reference cell).

<Opt.4>

A target PUCCH cell used for transmitting the last PUCCH associated with the DCI including the target PUCCH cell field and reported prior to detection of the current DCI may be configured as the target cell (reference cell).

<Proposal 3-2>

When the target PUCCH carrier (cell) is not indicated, an overlap between dynamic HARQ-ACK slots in different carriers is assumed in the terminal.

In Proposal 3-2, multiplexing of a Type-2 HARQ-ACK CB when dynamic HARQ-ACK slots on different PUCCH cells overlap with each other.

<Opt. 1>

In Opt. 1, a DAI-counter accumulates for the multiplexed dynamic HARQ-ACK CBs. That is, multiplexing of dynamic HARQ-ACKs from different PUCCH cells is considered when determining a DAI value.

(Generation of Type-2 HARQ-ACK CB for Multiplexed Dynamic HARQ-ACK)

The terminal generates a dynamic HARQ-ACK CB based on the DAI in accordance with, for example, the rules of TS38.213 in Rel. 16.

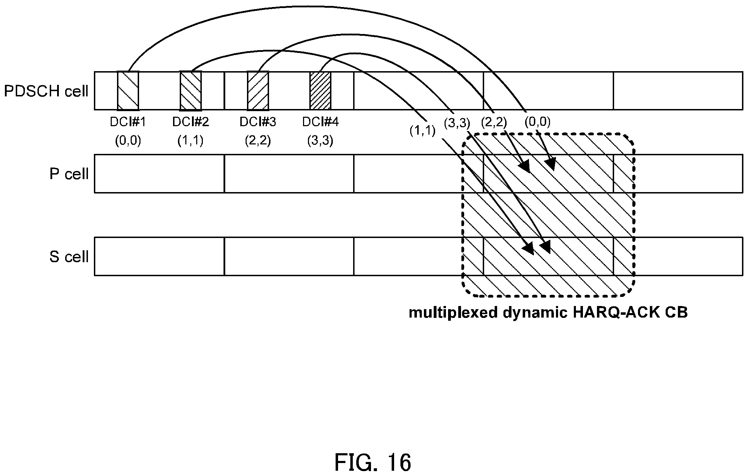

FIG. 16 illustrates an example in which the target cell that transmits HARQ-ACK bits for PDSCH of the DAI value (0, 0) scheduled by DCI #1 and transmits HARQ-ACK bits for PDSCH of the DAI value (2, 2) scheduled by DCI #3 is a PCell, and the target cell that transmits HARQ-ACK bits for PDSCH of the DAI value (1, 1) scheduled by DCI #2 and transmits HARQ-ACK bits for PDSCH of the DAI value (3, 3) scheduled by DCI #4 is an SCell.

In this case, the terminal generates a Type-2 HARQ-ACK CB (dynamic HARQ-ACK CB) for all HARQ-ACK bits individually without distinguishing by the target cell. Note that, in this situation, all DAI values are need to be different from each other regardless of the cell where HARQ-ACK bits are transmitted.

Incidentally, an SPS HARQ-ACK to be multiplexed with the dynamic HARQ-ACK is present, the SPS HARQ-ACK may be added after the generated dynamic HARQ-ACK CB, as in Proposal 1 described above.

<Opt. 2>

In Opt.2, the DAI counter accumulates for per-slot dynamic HARQ-ACK CB for each PUCCH cell. That is, the multiplexing of the dynamic HARQ-ACKs from different PUCCH cells is not considered when determining a DAI value.

(Generation of Type-2 HARQ-ACK CB for Multiplexed Dynamic HARQ-ACK)

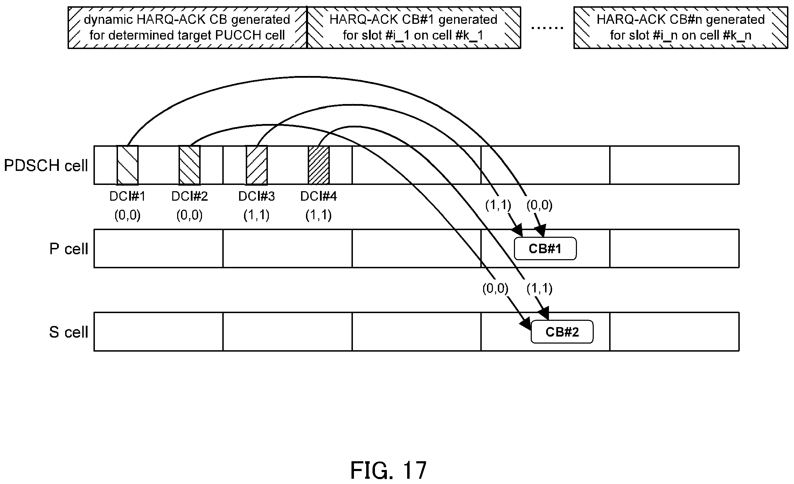

FIG. 17 is a diagram for describing an example of Opt. 2-2 of Proposal 3. The terminal may multiplex a plurality of dynamic HARQ-ACK CBs based on the following Step 1 and Step 2.

- Step 1

The terminal generates a Type-2 HARQ-ACK CB (dynamic HARQ-ACK CB for each target PUCCH cell individually based on the DAI in accordance with, for example, the rules of TS38.213 of Rel. 16.

FIG. 17 illustrates an example in which the target cell that transmits HARQ-ACK bits for PDSCH of the DAI value (0, 0) scheduled by DCI #1 and transmits HARQ-ACK bits for PDSCH of the DAI value (1, 1) scheduled by DCI #3 is a PCell, and the target cell that transmits HARQ-ACK bits for PDSCH of the DAI value (0, 0) scheduled by DCI #2 and transmits HARQ-ACK bits for PDSCH of the DAI value (1, 1) scheduled by DCI #4 is an SCell.

In this case, the terminal generates a Type-2 HARQ-ACK CB (dynamic HARQ-ACK CB for each of the PCell and the SCell individually. In this situation, the same DAI value may be used as long as HARQ-ACK bits are transmitted in different cells.

- Step 2

After the dynamic HARQ-ACK CB generated in the first PUCCH cell (HARQ-ACK CB#1 generated for slot #i_1 on cell #k_1 illustrated in FIG. 17), dynamic HARQ-ACK CB generated on other PUCCH target cells (HARQ-ACK CB#n generated for slot #i_n on cell #k_n illustrated in FIG. 17) are sequentially connected.

Incidentally, an SPS HARQ-ACK to be multiplexed with the dynamic HARQ-ACK is present, the following Opt. 2-1 and Opt. 2-2 (Opt. 2-2A and Opt. 2-2B) are considered as multiplexing methods for the SPS HARQ-ACK.

<Opt. 2-1>

In Opt. 2-1, the terminal places SPS HARQ-ACK bits between the dynamic HARQ-ACK bits.

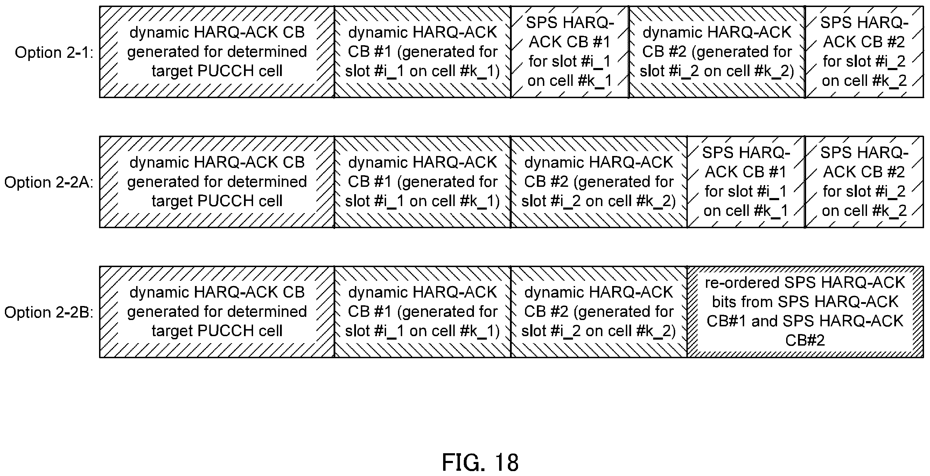

For example, as illustrated in the example of Option 2-1 in FIG. 18, HARQ-ACK bits (including dynamic HARQ-ACK bits and SPS HARQ-ACK bits) for one slot on one cell may be grouped, and HARQ-ACK bits for each PUCCH cell (e.g., set of dynamic HARQ-ACK CB #1 (generated for slot #i_1 on cell #k_1) and SPS HARQ-ACK CB #1 for slot #i_1 on cell #k_1, illustrated in FIG. 18) may be added after HARQ-ACK bits for the target PUCCH cell (dynamic HARQ-ACK CB generated for determined target PUCCH cell illustrated in FIG. 18).

<Opt. 2-2>

In Opt. 2-2, the terminal arranges dynamic HARQ-ACK bits and SPS HARQ-ACK bits separately.

For example, as illustrated in the examples of Option 2-2A and Option 2-2B in FIG. 18, dynamic HARQ-ACK bits for each PUCCH cell (e.g., dynamic HARQ-ACK CB #1 (generated for slot #i_1 on cell #k_1) and dynamic HARQ-ACK CB #2 (generated for slot #i_2 on cell #k_2), which are illustrated in FIG. 18) may be added after the dynamic HARQ-ACK bits for the target PUCCH cell (dynamic HARQ-ACK CB generated for determined target PUCCH cell illustrated in FIG. 18), and SPS HARQ-ACK bits are added thereafter. In this case, Opt. 2-2A and Opt. 2-2B can be considered as addition methods for the SPS HARQ-ACK bits.

<Opt. 2-2A>

The terminal simply adds a plurality of SPS HARQ-ACK CBs after the dynamic HARQ-ACK bits (SPS HARQ-ACK CB #1 for slot #i_1 on cell #k_1 and SPS HARQ-ACK CB #2 for slot #i_2 on cell #k_2, illustrated in FIG. 18).

<Opt. 2-2B>

The terminal again re-orders SPS HARQ-ACK bits from the plurality of SPS HARQ-ACK CBs (re-ordered SPS HARQ-ACK bits from SPS HARQ-ACK CB#1 and SPS HARQ-ACK CB #2, which are illustrated in FIG. 18).

<Variation>

Which of the plurality of proposals is applied, which of the plurality of options is applied, and/or which of a plurality of alternatives is applied may be determined by the following methods.

- It is/they are configured by parameters of a higher layer;
- The UE reports it/them as UE capability(ies);
- It is/they are described in the specifications;
- It is/they are determined based on configuration of higher-layer parameters and reported UE capability;
- It is/they are determined by a combination of two or more of the above determinations; and
- The slot may be replaced by the subslot.
- SPS HARQ-ACK slots may be before or after the semi-static PUCCH carrier switching. The multiplexing of the SPS HARQ-ACK and the dynamic HARQ-ACK may be performed before or after the semi-static PUCCH carrier switching. The terminal may apply the multiplexing of the SPS HARQ-ACK and the dynamic HARQ-ACK before or after the semi-static PUCCH carrier switching for the SPS HARQ-ACK.

For example, in a case where the multiplexing of the SPS HARQ-ACK and the dynamic HARQ-ACK is performed before the semi-static PUCCH carrier switching for the SPS HARQ-ACK, a multiplexing criteria (whether SPS HARQ-ACK slot and dynamic HARQ-ACK slot overlap) may be determined based on an original cell for the SPSHARQ-ACK (e.g., Pcell).

Further, for example, in a case where the multiplexing of the SPS HARQ-ACK and the dynamic HARQ-ACK is performed after the semi-static PUCCH carrier switching for the SPS HARQ-ACK, the multiplexing criteria (whether SPS HARQ-ACK slot and dynamic HARQ-ACK slot overlap) may be determined based on a cell after the carrier switching based on a PUCCH cell timing pattern.

- The parameters of a higher layer may be RRC parameters, Media Access Control Control Elements (MAC CEs), or may be a combination thereof.
- The processing in Proposal 1 may be applied to the Type-1 HARQ-ACK CB. For example, the Type-2 HARQ-ACK CB described in Proposal 1 may be replaced with the Type-1 HARQ-ACK CB.
- In the case of Proposal 3-1: which of options is applied depends on also whether the semi-static PUCCH carrier switching is enabled. For example, when the semi-static PUCCH carrier switching is also enabled, the target cell will be a Pcell/PSCell/PUCCH-Scell, i.e., Opt. 1 of proposed 3-1. Otherwise, Opt. 2 to Opt. 4 are used.

<UE capability>

The UE capability representing the capabilities of the UE may include information representing the following capabilities of the UE. Note that, the information representing the capabilities of the UE may correspond to information defining the capabilities of the UE.

- Information defining whether the UE supports the PUCCH carrier switching.
- Information defining whether the UE supports the dynamic PUCCH carrier switching.
- Information defining whether the UE overlaps and/or multiplexes a dynamic HARQ-AKC slot and an SPS HARQ-AKC slot on different carriers.

<Example of Radio Communication System>

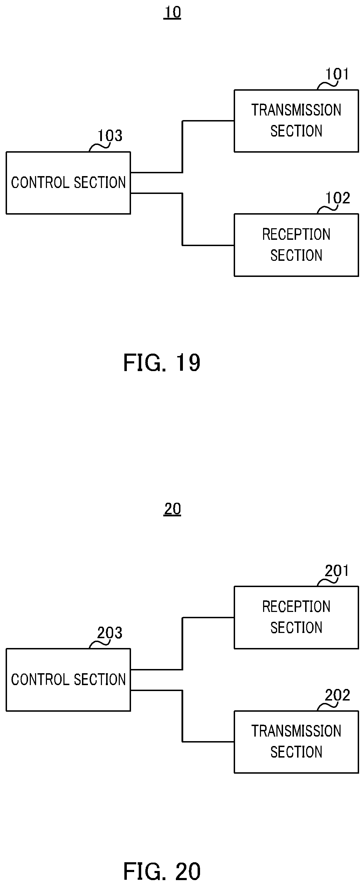

A radio communication system according to the present embodiment includes base station 10 illustrated in FIG. 19 and terminal 20 illustrated in FIG. 20. The number of base stations 10 and the number of terminals 20 are not particularly limited. For example, the system may be as illustrated in FIG. 1 in which two base stations 10 (base stations 10-1 and 10-2) communicate with one terminal 20. The radio communication system may be a radio communication system conforming to New Radio (NR). Illustratively, the radio communication system may be a radio communication system conforming to a scheme called URLLC and/or IIoT.

Note that, the radio communication system may be a radio communication system conforming to a scheme called 5G, Beyond 5G, 5G Evolution or 6G.

Base station 10 may be referred to as an NG-RAN Node, an ng-eNB, an eNodeB (eNB), or a gNodeB (gNB). Terminal 20 may be referred to as User Equipment (UE). Further, base station 10 may be regarded as an apparatus included in a network to which terminal 20 is connected.

The radio communication system may include a Next Generation-Radio Access Network (hereinafter referred to as NG-RAN). The NG-RAN includes a plurality of NG-RAN Nodes, specifically a plurality of gNBs (or ng-eNBs), is connected to a core network (5GC, not illustrated) conforming to 5G. Note that, the NG-RAN and the 5GC may be simply represented as "network."

Base station 10 performs radio communication with terminal 20. For example, the radio communication to be performed follows the NR. By controlling radio signals transmitted from a plurality of antenna elements, at least one of base station 10 and terminal 20 may support Massive Multiple-Input Multiple-Output (MIMO) that generates a beam (BM) having higher directivity. Further, at least one of base station 10 and terminal 20 may support carrier aggregation (CA) that aggregates and uses a plurality of component carriers (CC). Further, at least one of base station 10 and terminal 20 may support dual connectivity (DC) or the like that communicates between terminal 20 and each of a plurality of base stations 10.

The radio communication system may support a plurality of frequency bands. For example, the radio communication system supports Frequency Range (FR) 1 and FR 2. The frequency bands of the respective FRs are, for example, as follows.

- FR 1: 410 MHz to 7.125 GHz
- FR 2: 24.25 GHz to 52.6 GHz

In FR 1, a Sub-Carrier Spacing (SCS) of 15 kHz, 30 kHz or 60 kHz may be used, and a bandwidth (BW) of 5 MHz to 100 MHz may be used. FR 2 is, for example, a higher frequency than FR 1. In FR 2, an SCS of 60 kHz or 120 kHz may be used and a bandwidth (BW) of 50 MHz to 400 MHz may be used. FR 2 may also include an SCS of 240 kHz.

The radio communication system in the present embodiment may support a higher frequency band than the frequency band of FR 2. For example, the radio communication system in the present embodiment may support a frequency band exceeding 52.6 GHz and up to 114.25 GHz. Such a high frequency band may be referred to as "FR 2x."

Further, Cyclic Prefix-Orthogonal Frequency Division Multiplexing (CP-OFDM)/Discrete Fourier Transform-Spread-Orthogonal Frequency Division Multiplexing (DFT-S-OFDM) having a larger sub-carrier spacing (SCS) than that in the example described above may be applied. Further, the DFT-S-OFDM may be applied to both uplink and downlink or may be applied to one thereof.

In the radio communication system, a slot configuration pattern of Time Division Duplex (TDD) may be configured. For example, a pattern representing the order of two or more slots among slots for transmitting a downlink (DL) signal, slots for transmitting an uplink (UL) signal, slots in which a DL signal(s), a UL signal(s), and a guard symbol(s) are mixed, and slots in which a signal to be transmitted is flexibly changed may be defined in a slot configuration pattern.

Further, in the radio communication system, it is possible to perform PUSCH (or Physical Uplink Control Channel (PUCCH)) channel estimation by using a demodulation reference signal (DMRS) per slot, but it is further possible to perform PUSCH (or PUCCH) channel estimation by using DMRSs that are assigned to a plurality of slots, respectively. Such channel estimation may be referred to as joint channel estimation or may be referred to as another name, such as cross-slot channel estimation.

In a plurality of slots, terminal 20 may transmit DMRSs assigned to the plurality of slots, respectively, such that base station 10 can perform joint channel estimation using DMRSs.

Further, in the radio communication system, an enhanced function may be added to the function of feedback from terminal 20 to base station 10. For example, an enhanced function of feedback of the terminal for an HARQ-ACK may be added.

Next, configurations of base station 10 and terminal 20 will be described. Note that, the configurations of base station 10 and terminal 20 described below illustrate an example of functions related to the present embodiment. Base station 10 and terminal 20 may have functions that are not illustrated. Further, the function classification and/or the name of the functional section are/is not limited as long as the functions serve for executing operations according to the present embodiment.

<Configuration of Base Station>

FIG. 19 is a block diagram illustrating an example of a configuration of base station 10 according to the present embodiment. Base station 10 includes, for example, transmission section 101, reception section 102, and control section 103. Base station 10 communicates wirelessly with terminal 20 (see FIG. 20).

Transmission section 101 transmits a downlink (DL) signal to terminal 20. For example, transmission section 101 transmits the DL signal under the control by control section 103.

The DL signal may include, for example, a downlink data signal and control information (e.g., Downlink Control Information (DCI)). Further, the DL signal may include information indicating scheduling related to signal transmission of terminal 20 (e.g., UL grant). Further, the DL signal may include higher layer control information (e.g., Radio Resource Control (RRC) control information). Further, the DL signal may include a reference signal.

Channels used for DL signal transmission include, for example, data channels and control channels. For example, the data channels may include PDSCH (Physical Downlink Shared Channel) and the control channels may include PDCCH (Physical Downlink Control Channel). For example, base station 10 transmits control information to terminal 20 by using PDCCH and transmits a downlink data signal by using PDSCH.

The reference signal included in the DL signal may include, for example, at least one of a Demodulation Reference Signal (DMRS), a Phase Tracking Reference Signal (PTRS), a Channel State Information-Reference Signal (CSI-RS), a Sounding Reference Signal (SRS), and a Positioning Reference Signal (PRS) for position information. For example, the reference signal such as the DMRS and the PTRS is used for demodulating a downlink data signal and is transmitted by using PDSCH.

Reception section 102 receives an uplink (UL) signal transmitted from terminal 20. For example, reception section 102 receives the UL signal under the control of control section 103.

Control section 103 controls communication operations of base station 10 including transmission processing in transmission section 101 and reception processing in reception section 102.

For example, control section 103 acquires data and information such as control information from a higher layer, and outputs the data and information to transmission section 101. Further, control section 103 outputs the data, control information and/or the like received from reception section 102 to a higher layer.

For example, control section 103 allocates resources (or channels) used for DL signal transmission and reception and/or resources used for UL signal transmission and reception, based on a signal (e.g., data, control information and/or the like) received from terminal 20 and/or based on data, control information and/or the like acquired from a higher layer. Information on the allocated resources may be included in control information to be transmitted to terminal 20.

Control section 103 configures a PUCCH resource as an example of the allocation of resources used for UL transmission and reception. Information on PUCCH configuration such as a PUCCH cell timing pattern (PUCCH configuration information) may be indicated to terminal 20 by RRC.

<Configuration of Terminal>

FIG. 20 is a block diagram illustrating an example of a configuration of terminal 20 according to the present embodiment. Terminal 20 includes, for example, reception section 201, transmission section 202, and control section 203. Terminal 20 communicates wirelessly with, for example, base station 10.

Reception section 201 receives a DL signal transmitted from base station 10. For example, reception section 201 receives the DL signal under the control of control section 203.

Transmission section 202 transmits an UL signal to base station 10. For example, transmission section 202 transmits the UL signal under the control of control section 203.

The UL signal may include, for example, an uplink data signal and control information (e.g., UCI). For example, the UL signal may include information on processing capabilities of terminal 20 (e.g., UE capability). Further, the UL signal may include a reference signal.

Channels used for UL signal transmission include, for example, data channels and control channels. For example, the data channels include PUSCH (Physical Uplink Shared Channel) and the control channels include PUCCH (Physical Uplink Control Channel). For example, terminal 20 receives control information from base station 10 by using PUCCH and transmits an uplink data signal by using PUSCH.

The reference signal included in the UL signal may include, for example, at least one of a DMRS, a PTRS, a CSI-RS, an SRS, and a PRS. For example, the reference signal such as the DMRS and the PTRS is used for demodulating an uplink data signal and is transmitted by using an uplink channel (e.g., PUSCH).

Control section 203 controls communication operations of terminal 20 including reception processing in reception section 201 and transmission processing in transmission section 202.

For example, control section 203 acquires data and information such as control information from a higher layer, and outputs the data and control information to transmission section 202. Further, control section 203 outputs, for example, the data, control information and/or the like received from reception section 201 to a higher layer.

For example, control section 203 controls transmission of information to be fed back to base station 10. The information to be fed back to base station 10 may include, for example, an HARQ-ACK, Channel State Information (CSI), and a Scheduling Request (SR). The information to be fed back to base station 10 may be included in UCI. The UCI is transmitted in a PUCCH resource.

Control section 203 configures a PUCCH resource based on configuration information (e.g., configuration information such as PUCCH cell timing pattern and/or DCI, which are/is indicated by RRC) received from base station 10. Control section 203 determines a PUCCH resource used for transmitting the information to be fed back to base station 10. Under the control of control section 203, transmission section 202 transmits the information to be fed back to base station 10 in the PUCCH resource determined by control section 203.

Note that, the channels used for DL signal transmission and the channels used for UL signal transmission are not limited to the examples mentioned above. For example, the channels used for DL signal transmission and the channels used for UL signal transmission may include a Random Access Channel (RACH) and a Physical Broadcast Channel (PBCH). The RACH may be used, for example, to transmit Downlink Control Information (DCI) including a Random Access Radio Network Temporary Identifier (RA-RNTI).

Control section 203 may multiplex a first CB and a second CB. The first CB is for a response signal in the dynamically scheduled signal included in a first slot, and the second CB is for a response signal in the semi-statically scheduled signal included in a second slot overlapping with the first slot. Further, the first slot and the second slot are in different uplink cells. Transmission section 202 may transmit the multiplexed CB.

The first slot may be, for example, the dynamic HARQ-ACK slot illustrated in FIG. 11. The second slot may be, for example, a SPS HARQ-ACK slot illustrated in FIG. 11. The first CB may be, for example, the HARQ-ACK CB illustrated in FIG. 11. The second CB may be, for example, SPS HARQ-ACK CB #1 and SPS HARQ-ACK CB #2 illustrated in FIG. 11.

Control section 203 may add the second CB following (temporally following) to the first CB. For example, control section 203 may add SPS HARQ-ACK CB #1 and SPS HARQ-ACK CB #2 following the HARQ-ACK CB illustrated in FIG. 11.

Control section 203 may re-order the response signal of the second CB and a response signal of a third CB, which is a response signal in the semi-statically scheduled signal included in a third slot overlapping with the first slot. Control section 203 may add the CB in which the response signals are re-ordered, following the first CB. For example, control section 203 may re-order the SPS HARQ-ACK of SPS HARQ-ACK CB #1 and the SPS HARQ-ACK of SPS HARQ-ACK CB #2 illustrated in FIG. 12. Control section 203 may add the CB for the re-ordered SPS HARQ-ACKs following the HARQ-ACK CB illustrated in FIG. 12.

Control section 203 may determine a slot set that is a union of a slot set for a first candidate received signal in which HARQ-ACKs are bundled to the first CB and a slot set for a second candidate received signal in which HARQ-ACKs are bundled to the second CB. For example, control section 203 may determine a slot set ({#n, #n+1, ..., #n+5}) that is a union of a candidate PDSCH slot set (slot set of dotted frame A11) in which HARQ-ACKs are bundled to the CB included in st11 illustrated in FIG. 13, a candidate PDSCH slot set (slot set of dotted frame A12) in which HARQ-ACKs are bundled to the CB included in st12, and a candidate PDSCH slot set (slot set of dotted frame A13) in which HARQ-ACKs are bundled to the CB included in st13. Control section 203 may multiplex the CBs of st11, st12, and st13 based on the determined union slot set.

The present disclosure has been described above.

<Hardware Configuration and the like>

Note that, the block diagrams used to describe the above embodiment illustrate blocks on the basis of functions. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or wirelessly), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmitting unit" or "transmitter." The methods for implementing the functions are not limited specifically as described above.

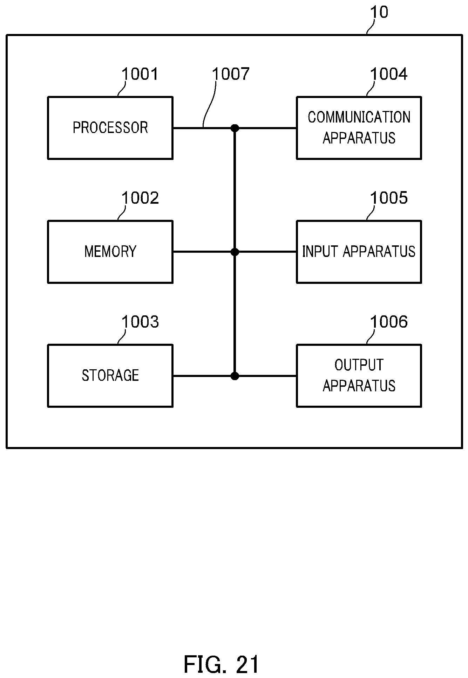

For example, the base station, the terminal, and the like according to an embodiment of the present disclosure may function as a computer that executes processing of a wireless communication method of the present disclosure. FIG. 21 illustrates an example of hardware configurations of the base station and of the terminal according to an embodiment of the present disclosure. Base station 10 and terminal 20 described above may be physically constituted as a computer apparatus including processor 1001, memory 1002, storage 1003, communication apparatus 1004, input apparatus 1005, output apparatus 1006, bus 1007, and the like.

Note that, the term "apparatus" in the following description can be replaced with a circuit, a device, a unit, or the like. The hardware configurations of base station 10 and of terminal 20 may include one apparatus or a plurality of apparatuses illustrated in the drawings, or may not include part of the apparatuses.

The functions of base station 10 and terminal 20 are implemented by predetermined software (program) loaded into hardware such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 103 and control section 203 as described above may be implemented by processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiment is used. For example, control section 203 of terminal 20 may be implemented by a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented by one or more chips. Note that, the program may be transmitted from a network through a telecommunication line.

Memory 1002 is a computer-readable recording medium and may be composed of, for example, at least one of a ROM (Read Only Memory), an EPROM (Erasable Programmable ROM), an EEPROM (Electrically Erasable Programmable ROM), and a RAM (Random Access Memory). Memory 1002 may be called a register, a cache, a main memory (main storage apparatus), or the like. Memory 1002 can save a program (program code), a software module, and the like that can be executed to carry out the wireless communication method according to an embodiment of the present disclosure.

Storage 1003 is a computer-readable recording medium and may be composed of, for example, at least one of an optical disk such as a CD-ROM (Compact Disc ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called an auxiliary storage apparatus. The storage medium as described above may be, for example, a database, a server or other appropriate media including at least one of memory 1002 and storage 1003.

Communication apparatus 1004 is hardware (transmission and reception device) for communication between computers through at least one of wired and wireless networks and is also called, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, transmission section 101, reception section 102, reception section 201, and transmission section 202, and the like as described above may be realized by communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which makes outputs to the outside. Note that, input apparatus 1005 and output apparatus 1006 may be integrated (for example, a touch panel).

The apparatuses, such as processor 1001, memory 1002 and the like, are connected by bus 1007 for communication of information. Bus 1007 may be configured using one bus or using buses different between each pair of the apparatuses.

Furthermore, base station 10 and terminal 20 may include hardware, such as a microprocessor, a digital signal processor (DSP), an ASIC (Application Specific Integrated Circuit), a PLD (Programmable Logic Device), and an FPGA (Field Programmable Gate Array), and the hardware may implement part or all of the functional blocks. For example, processor 1001 may be implemented using at least one of these pieces of hardware.

<Notification and Signaling of Information>

The notification of information is not limited to the embodiment described in the present disclosure, and the information may be notified by another method. For example, the notification of information may be carried out by one or a combination of physical layer signaling (for example, DCI (Downlink Control Information) and UCI (Uplink Control Information)), higher layer signaling (for example, RRC (Radio Resource Control) signaling, MAC (Medium Access Control) signaling, notification information (MIB (Master Information Block) and SIB (System Information Block))), and other signals. The RRC signaling may be called an RRC message and may be, for example, an RRC connection setup message, an RRC connection reconfiguration message, or the like.

<Application System>

The embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA 2000, UMB (Ultra Mobile Broadband), IEEE 802.11 (Wi-Fi (registered trademark)), IEEE 802.16 (WiMAX (registered trademark)), IEEE 802.20, UMB (Ultra-WideBand), Bluetooth (registered trademark), or other appropriate systems and a next-generation system extended based on the above systems. Additionally or alternatively, a combination of two or more of the systems (e.g., a combination of at least one of LTE and LTE-A and 5G) may be applied.

<Processing Procedure and the like>

The orders of the processing procedures, the sequences, the flow charts, and the like of the aspects and embodiment described in the present disclosure may be changed as long as there is no contradiction. For example, elements of various steps are presented in exemplary orders in the methods described in the present disclosure, and the methods are not limited to the presented specific orders.

<Operation of Base Station>

Specific operations which are described in the present disclosure as being performed by the base station may sometimes be performed by a higher node (upper node) depending on the situation. Various operations performed for communication with a terminal in a network constituted by one network node or a plurality of network nodes including a base station can be obviously performed by at least one of the base station and a network node other than the base station (examples include, but not limited to, MME and S-GW). Although there is one network node in addition to the base station in the case illustrated above, a plurality of other network nodes may be combined (for example, MME and S-GW).

<Direction of Input and Output>

The information or the like (see the item of "Information and Signals") can be output from a higher layer (or a lower layer) to a lower layer (or a higher layer). The information or the like may be input and output through a plurality of network nodes.

<Handling of Input and Output Information and the like>

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

<Determination Method>

The determination may be made based on a value expressed by one bit (0 or 1), based on a Boolean value (true or false), or based on comparison with a numerical value (for example, comparison with a predetermined value).

<Variations and the like of Aspects>

The aspects and embodiment described in the present disclosure may be independently used, may be used in combination, or may be switched and used along the execution. Further, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiment described in the present disclosure. Modifications and variations of the aspects of the present disclosure can be made without departing from the spirit and the scope of the present disclosure defined by the description of the appended claims. Therefore, the description in the present disclosure is intended for exemplary description and does not limit the present disclosure in any sense.

<Software>

Regardless of whether the software is called software, firmware, middleware, a microcode, or a hardware description language or by another name, the software should be broadly interpreted to mean instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a wireless technique (e.g., an infrared ray and a microwave), the at least one of the wired technique and the wireless technique is included in the definition of the transmission medium.

<Information and Signals>

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that, the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

<System and Network>

The terms "system" and "network" used in the present disclosure can be interchangeably used.

<Names of Parameters and Channels>

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (for example, PUCCH and PDCCH) and information elements can be identified by any suitable names, and various names allocated to these various channels and information elements are not limitative in any respect.

<Base Station>

The terms "base station (BS)," "wireless base station," "fixed station," "NodeB," "eNodeB (eNB)," "gNodeB (gNB)," "access point," "transmission point," "reception point," "transmission/reception point," "cell," "sector," "cell group," "carrier," and "component carrier" may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor (RRH: Remote Radio Head)). The term "cell" or "sector" denotes part or all of the coverage area of at least one of the base station and the base station subsystem that perform the communication service in the coverage.

<Mobile Station>

The terms "Mobile Station (MS)," "user terminal," "User Equipment (UE)," and "terminal" may be used interchangeably in the present disclosure.

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

<Base Station/Mobile Station>

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that, at least one of the base station and the mobile station also includes an apparatus that does not necessarily move during communication operation. For example, at least one of the base station and the mobile station may be IoT (Internet of Things) equipment such as a sensor.

The base station in the present disclosure may also be replaced with the terminal. For example, the embodiment of the present disclosure may find application in a configuration that results from replacing communication between the base station and the terminal with communication between multiple terminals (such communication may, e.g., be referred to as D2D (Device-to-Device), V2X (Vehicle-to-Everything), or the like). In this case, terminal 20 may be configured to have the functions that base station 10 described above has. The wordings "uplink" and "downlink" may be replaced with a corresponding wording for inter-terminal communication (for example, "side"). For example, an uplink channel, a downlink channel, and the like may be replaced with a side channel.

Similarly, the terminal in the present disclosure may be replaced with the base station. In this case, base station 10 is configured to have the functions that terminal 20 described above has.

<Meaning and Interpretation of Terms>

As used herein, the term "determining" may encompass a wide variety of actions. For example, "determining" may be regarded as judging, calculating, computing, processing, deriving, investigating, looking up, searching (or, search or inquiry) (e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming," "expecting," "considering," and the like.

The terms "connected" and "coupled" as well as any modifications of the terms mean direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like that are non-limiting and non-inclusive examples.

<Reference Signal>

The reference signal can also be abbreviated to an RS and may also be called a pilot depending on the applied standard.

<Meaning of "Based On">

The description "based on" used in the present disclosure does not mean "based only on," unless otherwise specified. In other words, the description "based on" means both of "based only on" and "based at least on."

<"First" and "Second">

Any reference to elements by using the terms "first," "second" and the like that are used in the present disclosure does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

<Means>

The "means" in the configuration of each apparatus described above may be replaced with "section," "circuit," "device," or the like.

<Open Form>

In a case where terms "include," "including," and their modifications are used in the present disclosure, these terms are intended to be inclusive like the term "comprising." Further, the term "or" used in the present disclosure is not intended to be an exclusive or.

<Time Units such as TTI, Frequency Units such as RB, and Radio Frame Configuration>

The radio frame may be constituted by one frame or a plurality of frames in the time domain. The one frame or each of the plurality of frames may be called a subframe in the time domain. The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology indicates, for example, at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., OFDM (Orthogonal Frequency Division Multiplexing) symbol, SC-FDMA (Single Carrier-Frequency Division Multiple Access) symbol, or the like) in the time domain. The slot may also be a time unit based on the numerology.

The slot may include a plurality of mini-slots. Each of the mini slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini-slot, and the symbol indicate time units in transmitting signals. The radio frame, the subframe, the slot, the mini-slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot or the like instead of a subframe.

Here, the TTI, for example, refers to a minimum time unit for scheduling in wireless communication. For example, in an LTE system, the base station performs scheduling for allocating a radio resource (a frequency bandwidth, a transmit power, and the like that can be used in each user terminal) on the basis of TTI to each user terminal. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword or the like is actually mapped may be shorter than the TTI.

Note that, in a case where one slot or one mini-slot is referred to as the TTI, one or more TTIs (that is, one or more slots or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that, the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini-slot, one subframe, or one TTI. One TTI and one subframe may be constituted by one resource block or a plurality of resource blocks.

Note that, one or more RBs may be referred to as a Physical Resource Block (PRB: Physical RB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common RBs (common resource blocks) for certain numerology in a certain carrier. Here, the common RBs may be identified by RB indices that use a common reference point of the carrier as a reference. The PRB may be defined by a certain BWP and may be numbered within the BWP.

The BWP may include a BWP for UL (UL BWP) and a BWP for DL (DL BWP). An UE may be configured with one or more BWPs within one carrier.

At least one of the configured BWPs may be active, and the UE does not have to assume transmission/reception of a predetermined signal or channel outside the active BWP. Note that, "cell," "carrier" and the like in the present disclosure may be replaced with "BWP."

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

<Maximum Transmit Power>

The "maximum transmit power" described in the present disclosure may mean a maximum value of the transmit power, the nominal UE maximum transmit power, or the rated UE maximum transmit power.

<Article>

In a case where articles, such as "a," "an," and "the" in English, for example, are added in the present disclosure by translation, nouns following these articles may have the same meaning as used in the plural.

<"Different">

In the present disclosure, the expression "A and B are different" may mean that "A and B are different from each other." Note that, the expression may also mean that "A and B are different from C." The expressions "separated" and "coupled" may also be interpreted in the same manner as the expression "A and B are different."

The present patent application claims the benefit of priority based on Japanese Patent Application No. 2021-133720 filed on August 18, 2021, and the entire content of Japanese Patent Application No. 2021-133720 is hereby incorporated by reference.

Industrial Applicability

An aspect of the present disclosure is useful for radio communication systems.

Reference Signs List

10 Base station
20 Terminal
101, 202 Transmission section
102, 201 Reception section
103, 203 Control section

**Claims**

1. A terminal, comprising:

   a reception section that receives a control signal and a dynamically scheduled signal;
   a control section that determines a transmission cell for a response signal, based on whether the transmission cell for the response signal in the dynamically scheduled signal is indicated by the control signal; and
   a transmission section that transmits the response signal on the transmission cell that is determined by the control section.

2. The terminal according to claim 1, wherein the control section determines a target cell that is configured by default as the transmission cell for the response signal, in a case where the transmission cell for the response signal is not indicated by the control signal.

3. The terminal according to claim 1, wherein the control section determines, as the transmission cell for the response signal, a target cell that is indicated by the last control signal in which the transmission cell for the response signal is indicated, in a case where the transmission cell for the response signal is not indicated by the control signal.

4. The terminal according to claim 1, wherein:

   in a case where the transmission cell for the response signal is not indicated by the control signal, the control section multiplexes a first codebook and a second codebook, the first codebook being for the response signal included in a first slot on a first cell, the second codebook being for the response signal included in a second slot on a second cell, the second slot being a slot on an uplink cell different from that of the first slot and overlapping with the first slot; and
   the transmission section transmits the multiplexed first codebook and second codebook.

5. A radio communication method, comprising:

   receiving a control signal and a dynamically scheduled signal;

determining a transmission cell for a response signal, based on whether the transmission cell for the response signal in the dynamically scheduled signal is indicated by the control signal; and transmitting the response signal on the transmission cell that is determined.

FIG. 1

FIG. 2

EP 4 391 641 A1

FIG. 3

EP 4 391 641 A1

FIG. 4

EP 4 391 641 A1

**Example**: configured K1 set $C(K_1) = \{1,2,3,4\}$, assuming $\mu_{DL} = \mu_{UL}$

Serving cell c

| n | n+1 | n+2 | n+3 | n+4 |

| K1=4 | K1=3 | K1=2 | K1=1 |

PUCCH cell

| n | n+1 | n+2 | n+3 | n+4 |

FIG. 5

**Example**: configured K1 set $C(K_1) = \{1,2,3,4,5\}$, assuming $\mu_{DL} > \mu_{UL}$

| Serving cell c | 2n | 2n+1 | 2n+2 | 2n+3 | 2n+4 | 2n+5 | 2n+6 | 2n+7 | 2n+8 | 2n+9 | 2n+10 | 2n+11 |
|---|---|---|---|---|---|---|---|---|---|---|---|---|
| | K1=5 | K1=5 | K1=4 | K1=4 | K1=3 | K1=3 | K1=2 | K1=2 | K1=1 | K1=1 | | |

| PUCCH cell | n | n+1 | n+2 | n+3 | n+4 | n+5 |
|---|---|---|---|---|---|---|

## FIG. 6

$M_{A,c}$ for sercing cell c :

| Candidate PDSCH reception occasions in **DL slot(s) for $K_{1,1}$** (e.g. slot $n_{D,1}$) | ...... | Candidate PDSCH reception occasions in **DL slot(s) for $K_{1,k}$** (e.g. slot $n_{D,k}$) | ...... |

FIG. 7

EP 4 391 641 A1

FIG. 8

EP 4 391 641 A1

| PUCCH cell #1 | SPS HARQ slot | | SPS HARQ slot | | dynamic HARQ-ACK slot | | dynamic HARQ-ACK slot | |
|---|---|---|---|---|---|---|---|---|
| PUCCH cell #2 | dynamic HARQ slot | dynamic HARQ-ACK slot | dynamic HARQ slot | dynamic HARQ-ACK slot | SPS HARQ-ACK slot | SPS HARQ-ACK slot | SPS HARQ-ACK slot | SPS HARQ-ACK slot |
| Pcell/PScell | | | | | | | | |

FIG. 9

EP 4 391 641 A1

PUCCH cell #1

A1

SPS HARQ slot

dynamic HARQ-ACK slot

A3a

dynamic HARQ-ACK slot

A3b

SPS HARQ slot

PUCCH cell #2

dynamic HARQ slot | dynamic HARQ-ACK slot

A2

SPS HARQ slot

SPS HARQ-ACK slot | SPS HARQ-ACK slot

dynamic HARQ-ACK slot

A4a

PUCCH cell #3

dynamic HARQ slot

A4b

SPS HARQ-ACK slot

**FIG. 10**

FIG. 11

FIG. 12

FIG. 13

EP 4 391 641 A1

| type 1 HARQ-ACK CB generated for the reporting slot on target cell | SPS HARQ-ACK CB #1 overlapping with the reporting slot | ...... | SPS HARQ-ACK CB #k overlapping with the reporting slot |
|---|---|---|---|

serving cell #m     ......     serving cell #n

SPS configuration #x     ......     SPS configuration #y

slot #p     ......     slot #q

A21

PUCCH cell #1

HARQ-ACK reporting slot on target cell

PUCCH cell #2

A22   overlapping SPS HARQ-ACK CB #1     overlapping SPS HARQ-ACK CB #2   A23

FIG. 14

| type 1 HARQ-ACK CB generated for the reporting slot on target cell | SPS HARQ-ACK bits from overlapping SPS HARQ-ACK CBs |

serving cell #m        ......        serving cell #n

SPS configuration #x ...... SPS configuration #y

slot #p ...... slot #q

FIG. 15

multiplexed dynamic HARQ-ACK CB

FIG. 16

EP 4 391 641 A1

FIG. 17

EP 4 391 641 A1

| Option 2-1: | dynamic HARQ-ACK CB generated for determined target PUCCH cell | dynamic HARQ-ACK CB #1 (generated for slot #i_1 on cell #k_1) | SPS HARQ-ACK CB #1 for slot #i_1 on cell #k_1 | dynamic HARQ-ACK CB #2 (generated for slot #i_2 on cell #k_2) | SPS HARQ-ACK CB #2 for slot #i_2 on cell #k_2 |

| Option 2-2A: | dynamic HARQ-ACK CB generated for determined target PUCCH cell | dynamic HARQ-ACK CB #1 (generated for slot #i_1 on cell #k_1) | dynamic HARQ-ACK CB #2 (generated for slot #i_2 on cell #k_2) | SPS HARQ-ACK CB #1 for slot #i_1 on cell #k_1 | SPS HARQ-ACK CB #2 for slot #i_2 on cell #k_2 |

| Option 2-2B: | dynamic HARQ-ACK CB generated for determined target PUCCH cell | dynamic HARQ-ACK CB #1 (generated for slot #i_1 on cell #k_1) | dynamic HARQ-ACK CB #2 (generated for slot #i_2 on cell #k_2) | re-ordered SPS HARQ-ACK bits from SPS HARQ-ACK CB#1 and SPS HARQ-ACK CB#2 |

FIG. 18

_10_

FIG. 19

_20_

FIG. 20

FIG. 21

## INTERNATIONAL SEARCH REPORT

| International application No. |
|---|
| **PCT/JP2022/026376** |

| A. | CLASSIFICATION OF SUBJECT MATTER |
|---|---|

*H04W 28/04*(2009.01)i; *H04W 16/32*(2009.01)i; *H04W 72/04*(2009.01)i
FI: H04W28/04 110; H04W72/04 136; H04W16/32; H04W72/04 111

According to International Patent Classification (IPC) or to both national classification and IPC

| B. | FIELDS SEARCHED |
|---|---|

Minimum documentation searched (classification system followed by classification symbols)

H04W28/04; H04W16/32; H04W72/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | ERICSSON. HARQ-ACK Enhancements for IIoT/URLLC[online]. 3GPP TSG RAN WG1 #106-e R1-2106678. 07 August 2021, section 2.1.3 in particular, Proposal 9 | 1-2, 5 |
| A | | 3-4 |
| A | NTT DOCOMO, INC. Discussion on HARQ-ACK feedback enhancements for Rel.17 URLLC[online]. 3GPP TSG RAN WG1 #106-e R1-2107851. 06 August 2021, section 2.5 in particular, section 2.5 | 1-5 |
| P, A | NTT DOCOMO, INC. Discussion on HARQ-ACK feedback enhancements for Rel.17 URLLC[online]. 3GPP TSG RAN WG1 #106b-e R1-2109671. 11 October 2021, section 2.4 in particular, section 2.4 | 1-5 |

☐ Further documents are listed in the continuation of Box C.　　☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 September 2022** | **20 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**EP 4 391 641 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021133720 A

**Non-patent literature cited in the description**

- Enhanced Industrial Internet of Things (IoT) and ultra-reliable and low latency communication. *RP-201310,3GPP TSG RAN Meeting #86e, 3GPP,* July 2020